(19) Europäisches Patentamt
European Patent Office
Office européen des brevets

(11) EP 4 741 404 A1

(12) EUROPEAN PATENT APPLICATION

(43) Date of publication:
**13.05.2026 Bulletin 2026/20**

(21) Application number: **24212374.3**

(22) Date of filing: **12.11.2024**

(51) International Patent Classification (IPC):
***C07F 7/18*** *(2006.01)* ***B60C 1/00*** *(2006.01)*
***C08C 19/25*** *(2006.01)* ***C08C 19/44*** *(2006.01)*
***C08F 4/48*** *(2006.01)* ***C08F 236/10*** *(2006.01)*
***C08K 3/36*** *(2006.01)* ***C08L 15/00*** *(2006.01)*

(52) Cooperative Patent Classification (CPC):
(C-Sets available)
**C07F 7/1804; B60C 1/0016; C08C 19/22; C08C 19/25; C08C 19/44; C08F 136/06; C08K 3/36**
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Synthos Dwory 7 spolka z ograniczona odpowiedzialnoscia**
**32-600 Oswiecim (PL)**

(72) Inventors:
- **Boomhoff, Michael**
  **04425 Taucha (DE)**
- **Thiele, Sven**
  **06120 Halle (DE)**
- **Kühn, Martin**
  **04178 Leipzig (DE)**
- **Thielemann, Dominique**
  **61440 Oberursel (DE)**

(74) Representative: **Hoffmann Eitle**
**Patent- und Rechtsanwälte PartmbB**
**Arabellastraße 30**
**81925 München (DE)**

(54) **FUNCTIONALIZED AMINOSILANE IN THE MANUFACTURE OF POLYMERS**

(57) The present invention relates to aminosilane compounds useful in the manufacture of polymers that can be used in rubber articles such as tires. The present invention further relates to a process for preparing a polymer in the presence of aminosilane compounds, a polymer obtainable by such process, non-vulcanized and vulcanized polymer compositions comprising the polymer and articles comprising one or more components formed from the vulcanized polymer composition, such as tires or components thereof.

EP 4 741 404 A1

(52) Cooperative Patent Classification (CPC): (Cont.)

C-Sets
**C08F 236/10, C08F 4/48;**
**C08L 15/00, C08L 9/00, C08L 91/00, C08L 91/06,**
**C08K 3/36, C08K 5/548, C08K 5/09, C08K 5/18,**
**C08K 3/22, C08K 3/06, C08K 5/47, C08K 5/31;**
C08F 236/06, C08F 212/08

## Description

## FIELD OF THE INVENTION

The present invention relates to novel aminosilane compounds which can be useful in the manufacture of polymers that can be used in rubber articles such as tires. The present invention further relates to a process for preparing a polymer in the presence of aminosilane compounds, a polymer obtainable by this process, non-vulcanized and vulcanized polymer compositions comprising the polymer and articles comprising one or more components formed from the vulcanized polymer composition.

## BACKGROUND OF THE INVENTION

Articles such as a tire may be formed in the process of vulcanizing a polymer composition that includes a polymer and one or more additives such as for example fillers. Generally, in such compositions, when increasing the polymer functionalization degree by introducing functional groups capable of reacting and/or interacting with the filler, improved dynamic properties in the vulcanized article may be obtained. As a consequence, the rolling resistance and wet grip balance may be improved leading to a lower fuel consumption of the tire and improved tire safety characteristics on a wet road.

On the other hand, the viscosity of a non-vulcanized polymer composition increases with increasing functionalization degree due to stronger polymer-filler interactions and more interconnected polymer-filler aggregates. Usually, high viscosities negatively impact the throughput of tire production, rubber sheet quality and rubber formulation extrusion characteristics.

Therefore, there is a need for providing polymer compositions with low viscosity of polymers with increased the functionalization degree. The present invention aims at the provision of such polymer composition and provides a hydrolysable aminosilane compound that can be used as a coupling agent when preparing a polymer included in the polymer composition.

Standard coupling agents such as tin tetrachloride ($SnCl_4$), tetrachloro silane, etc., may functionalize the polymer chain end and react with components of a composition, for example with a filler or with unsaturated portions of a polymer. Generally, coupling agents may reduce hysteresis loss by reducing the number of free chain ends of the polymer and may reduce the polymer solution viscosity compared with non-coupled, essentially linear, polymer macromolecules of identical molecular weight.

By using the coupling agent according to the present invention, the coupled fraction is hydrolyzed during compounding leading to lower molecular weights with functional groups at the chain ends capable of interacting with the filler. As a result, lower viscosities of the corresponding formulations are obtained by maintaining dynamic properties of the cured formulations when compared to polymers coupled with a standard coupling agent and optionally functionalized with similar chain end modifiers. Due to the lower compound viscosities the processing properties are improved although the functionalization degree is increased.

## SUMMARY OF THE INVENTION

The present invention is based on the finding that the above objects can be solved by carrying out the polymerization of conjugated diene monomers in the presence of an aminosilane compound.

Thus, in a first aspect, the present invention provides an aminosilane compound of the following Formula (I):

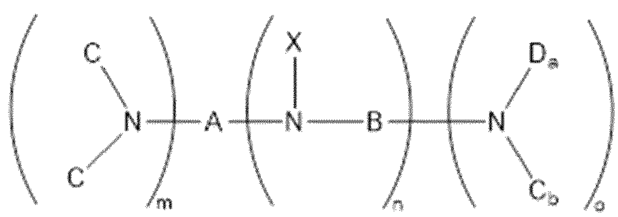

wherein, in formula (I), m is 1 to 3; n is 0 to 3; o is 1 to 3; A is a $C_2$-$C_{20}$ hydrocarbon group which optionally comprises at least one heteroatom, selected from S, O and Si; B is a $C_2$-$C_{20}$ hydrocarbon group which optionally comprises at least one heteroatom, selected from S, O and Si; C independently is $Si(R^1)_x(OR^2)_y$, wherein $R^1$ and $R^2$ are each independently a $C_1$-$C_{20}$ hydrocarbon group, x is 1, 2 or 3, y is 0, 1 or 2 with y = 3-x, and when x is 3 then at least one $R^1$ is a vinyl group; D is a $C_1$-$C_{20}$ hydrocarbon group; X is D or C; a is 0, 1 or 2; b is 0, 1 or 2; and a + b = 2; and when n is 0 and a is 1 or 2, then A and D may be connected so as to form a cyclic structure.

In a second aspect, the present invention provides a process for preparing a polymer, wherein the process comprises the following steps: (a) reacting conjugated diene monomers and optionally one or more aromatic vinyl monomers in the presence of one or more initiator compounds in a polymerization process to form a living polymer chain, (b) reacting the living polymer chain with an aminosilane compound of formula (I) as defined in the first aspect of the invention, and (c) optionally reacting the remaining living chain ends with a chain end modifier.

In a third aspect, the present invention provides a polymer obtainable by the process as defined in the second aspect of the invention.

In a fourth aspect, the present invention provides a non-vulcanized polymer composition comprising the polymer of the third aspect of the present invention and one or more additives.

In a fifth aspect, the present invention provides a vulcanized polymer composition which is obtainable by vulcanizing the polymer composition of the fourth aspect of the present invention and one or more vulcanizing agents.

In a sixth aspect, the present invention provides a method of preparing a vulcanized polymer composition, wherein the method comprises the step of vulcanizing the polymer composition of the fourth aspect of the present invention which further comprises one or more vulcanizing agents.

In a seventh aspect, the present invention provides an article comprising at least one component formed from the vulcanized polymer composition of the fifth aspect of the present invention.

The present invention is based on the finding that specific aminosilane compounds may be used as coupling agents and allow the preparation of polymers and compositions that exhibit beneficial properties especially when used in the manufacture of tires. Specifically, the vulcanized polymer compositions ("vulcanized rubber compounds") produced from the polymer of the invention exhibit an improved balance of low rolling resistance and high wet grip paired with good mechanical properties and reduced viscosity.

Without being bound by theory, the present invention assumes that, since using the coupling agent of the invention results in hydrolysis of the coupled fraction during compounding, lower molecular weights with functional groups at the chain ends are obtained, which are capable of interacting with the filler. As a result, the dynamic properties of the cured silica formulations are maintained although the functionalization degree is increased since the viscosities of the corresponding silica formulations are reduced, which leads to improved processing properties.

As a result, the present invention can address the requirements described herein, fulfilling them by a coupling agent not considered in the present field before, namely an aminosilane. By this way, the present invention has been achieved.

## DEFINITIONS

In the present disclosure, the following definitions are applicable. The chemical definitions of substituents or specific moieties, as well as abbreviations as used herein generally correspond to the meaning known in the art.

For example, hydrocarbon groups as used herein and unless specifically defined otherwise, whether as such or in association with other groups, include optionally substituted groups selected from a linear, branched or cyclic alkyl, alkenyl or alkynyl group; an aryl group, or an alkylaryl group.

Alkyl groups as used herein and unless specifically defined otherwise, whether as such or in association with other groups, such as alkoxy or alkylaryl, include both straight linear alkyl groups, such as methyl, ethyl, n-propyl, n-butyl, n-pentyl, n-hexyl, octyl etc., branched alkyl groups, such as isopropyl, tert-butyl, etc., and cyclic alkyl groups, such as cyclohexyl.

The term "aryl" as used herein refers to a carbocyclic ring system comprising 6 to 10 carbon atoms and at least one aromatic ring. For purposes of embodiments of this invention, the aryl group is a monocyclic or bicyclic ring system. Aryl groups as used herein include, but are not limited to, phenyl, biphenyl and other benzenoid compounds. Aryl groups preferably contain only one aromatic ring and most preferably contain a C6 aromatic ring.

Alkylaryl groups as used herein refer to a combination of one or more aryl groups bound to one or more alkyl groups, for example in the form of alkyl-aryl, aryl-alkyl, alkyl-aryl-alkyl and aryl-alkyl-aryl. Alkylaryl groups preferably contain only one aromatic ring and most preferably contain a C6 aromatic ring. For example, one preferred alkylaryl group is benzyl.

Alkoxy groups as used herein refer to alkyl groups bonded to oxygen and aryloxy groups refer to aryl groups bonded to oxygen.

The term "optionally substituted" as used herein means that the group referenced is either unsubstituted or is substituted by one or more substituents, preferably 1, 2, 3, 4 or 5 substituents. For example, "$C_3$-hydrocarbon being optionally substituted with 1 or 2 methyl groups" means $C_2$-hydrocarbon, $C_3$-hydrocarbon substituted with 1 methyl group and $C_3$-hydrocarbon substituted with 2 methyl groups. Preferably, optional substitution means that the group referenced is either unsubstituted or is substituted by one or more, preferably 1, 2, 3, 4 or 5, non-hydrogen substituents. Unless specified otherwise, the term "substituted" as used herein includes, but is not limited to, any of a linear, branched or cyclic groups selected from alkyl, alkenyl, alkynyl, alkoxy, alkoxyalkyl, alkylaminyl, aminylalkyl, alkylaminylalkyl, thioalkyl and cyanoalkyl, or a group selected from aryl, alkylaryl, alkylcycloalkyl, alkylcylcloalkenyl, aryloxy and arylalkyloxy, wherein optionally at least one hydrogen atom (*e.g.*, 1, 2, 3 or all hydrogen atoms) is replaced by a bond to a non-hydrogen atom such as, but not limited to: a halogen atom such as F, Cl, Br, and I; an oxygen atom in groups such as alkoxy groups, and ester groups; a sulfur atom in groups such as thioalkyl groups, sulfonyl groups, and sulfoxide groups; a nitrogen atom in groups such as amides, alkylamines, dialkylamines, arylamines, alkylarylamines, diarylamines, N-oxides, imides, and enamines; a silicon atom in groups such as trialkylsilyl groups, dialkylarylsilyl groups, alkyldiarylsilyl groups, and triarylsilyl groups; and other heteroatoms in various other groups. "Substituted" also means any of the above groups in which one or more hydrogen atoms are replaced by a higher-order bond (*e.g.*, a double- or triple-bond) to a heteroatom such as oxygen in oxo, carbonyl, carboxyl, and ester groups; and nitrogen in groups such as imines, oximes, hydrazones, and nitriles. For example, "substituted" includes any of the above groups in which one or more hydrogen atoms are replaced with $-NR_gR_h$, $-NR_gC(=O)R_h$, $-NR_gC(=O)NR_gR_h$, $-NR_gC(=O)OR_h$, $-NR_gSO_2R_h$, $-OC(=O)NR_gR_h$, $-OR_g$, $-SR_g$, $-SOR_g$, $-SO_2R_g$, $-OSO_2R_g$, $-SO_2OR_g$, $=NSO_2R_g$, and $-SO_2NR_gR_h$. "Substituted" also means any of the above groups in which one or more hydrogen atoms are replaced with $-C(=O)R_g$, $-C(=O)OR_g$, $-C(=O)NR_gR_h$, $-CH_2SO_2R_g$, $-CH_2SO_2NR_gR_h$. In the foregoing, $R_g$ and $R_h$ are the same or different and independently hydrogen, alkyl, alkoxy, alkylaminyl, thioalkyl, aryl, aralkyl, cycloalkyl or a combination thereof. "Substituted" further means any of the above groups in which one or more hydrogen atoms are replaced by a bond to a cyano, imino, nitro, oxo, thioxo, halo, alkyl, alkoxy, alkylaminyl, thioalkyl, aryl, aralkyl, cycloalkyl, cycloalkylalkyl, haloalkyl, heterocyclyl, *N*-heterocyclyl, heterocyclylalkyl, heteroaryl, N-heteroaryl and/or heteroarylalkyl group. In addition, each of the foregoing substituents may also be optionally substituted with one or more of the above substituents.

Where the present description refers to "preferred" embodiments/features, combinations of these preferred embodiments/features shall also be deemed as disclosed as long as this combination is technically meaningful and obvious for the person skilled in the art.

Hereinafter, the use of the terms "comprising", "containing" and "including" should be understood as disclosing in a non-limited way, that is to say that additional components or steps can be present or implemented, as long as this is technically meaningful.

## DETAILED DESCRIPTION

### Aminosilane compound

The aminosilane compound according to the first aspect of the present invention is characterized by having at least two siloxy groups directly attached to a tertiary amino group, thereby representing an aminosilane.

Specifically, the aminosilane compound according to the first aspect of the present invention corresponds to the following Formula (I):

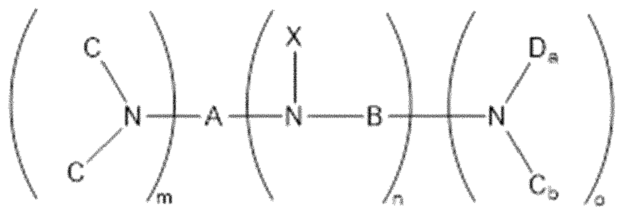

In formula (I), m is 1 to 3; preferably, m is 1 to 2; and more preferably, m is 1. Moreover, n in formula (I) is 0 to 3; preferably, n is 0 to 2; and more preferably, n is 0. Also, o in formula (I) is 1 to 3; preferably, o is 1 to 2; and more preferably, o is 1. In another preferred embodiment, m + n + o is 2, 3 or 4. More preferably, m + n + o is 2.

In formula (I), A is a $C_2$-$C_{20}$ hydrocarbon group. The hydrocarbon group A may optionally comprise at least one heteroatom, selected from S, O and Si. Preferably, A is a $C_2$-$C_6$ aliphatic hydrocarbon group, which optionally comprises at least one heteroatom, selected from S, O and Si. More preferably, A is a $C_2$-$C_6$ aliphatic hydrocarbon group, which comprises at least one heteroatom, selected from S and O. In an alternative preferred embodiment, A is a $C_2$-$C_6$ hydrocarbon group, which comprises one or two heteroatoms, selected from S and O. Most preferably, A is a $C_2$-hydrocarbon group or a $C_2$-$C_6$ hydrocarbon group which contains two S or two O atoms.

The hydrocarbon group A may be optionally substituted. To be specific, the hydrocarbon group A of formula (I) may be unsubstituted; may be substituted; may comprise at least one heteroatom, selected from S, O and Si; or may be substituted and comprise at least one heteroatom, selected from S, O and Si. In the optional embodiment, where the hydrocarbon group A is substituted, it comprises 2 to 20 carbon atoms, preferably 2 to 6 carbon atoms, including the carbon atoms of the substituent. For example, when A is a substituted $C_2$-$C_{20}$ hydrocarbon group, it means a substituted hydrocarbon group having a total of not less than 2 and not more than 20 carbon atoms.

In formula (I), B is a $C_2$-$C_{20}$ hydrocarbon group. The hydrocarbon group B may optionally comprise at least one heteroatom, selected from S, O and Si. Preferably, B is a $C_2$-$C_6$ aliphatic hydrocarbon group, which optionally comprises at least one heteroatom, selected from S, O and Si; more preferably, B is a $C_2$-$C_6$ aliphatic hydrocarbon group, which comprises at least one heteroatom, selected from Sand O.

The hydrocarbon group B may be optionally substituted. To be specific, the hydrocarbon group B of formula (I) may be unsubstituted; may be substituted; may comprise at least one heteroatom, selected from S, O and Si; or may be substituted and comprise at least one heteroatom, selected from S, O and Si. In the case where B is substituted, it comprises 2 to 20 carbon atoms, preferably 2 to 6 carbon atoms, including the carbon atoms of the substituent. For example, when B is a substituted $C_2$-$C_{20}$ hydrocarbon group, it means a substituted hydrocarbon group having a total number of not less than 2 and not more than 20 carbon atoms.

In formula (I), each C is independently selected from $Si(R^1)_x(OR^2)_y$, with $R^1$ and $R^2$ being each independently a $C_1$-$C_{20}$ hydrocarbon group; preferably a $C_1$-$C_{10}$ aliphatic hydrocarbon group; more preferably, a $C_1$-$C_{10}$ aliphatic hydrocarbon group; more preferably a $C_1$-$C_6$ hydrocarbon group, more preferably a $C_1$-$C_3$ hydrocarbon group, and most preferably a $C_1$ hydrocarbon group.

In $Si(R^1)_x(OR^2)_y$ of formula (I), x is 1, 2 or 3, preferably 1 or 2, and more preferably 1. When x is 3 then at least one $R^1$ is a vinyl group.

The y in $Si(R^1)_x(OR^2)_y$ of formula (I) is 0, 1 or 2, preferably 1 or 2, and more preferably 2; with y = 3-x. Expressed differently, when x in $Si(R^1)_x(OR^2)_y$ of formula (I) is 1, y is 2; when x is 2, y is 1; and when x is 3, y is 0.

In formula (I), D is a $C_1$-$C_{20}$ hydrocarbon group. Preferably, D is a $C_1$-$C_{10}$ hydrocarbon group; and more preferably, D is a $C_1$-$C_6$ hydrocarbon group. The hydrocarbon group D may be optionally substituted. In the case where D is substituted, it comprises 1 to 20 carbon atoms, preferably 1 to 10, more preferably 1 to 6 carbon atoms, including the carbon atoms of the substituent. For example, when D is a substituted $C_1$-$C_{20}$ hydrocarbon group, it corresponds to a substituted hydrocarbon group having a total number of not more than 20 carbon atoms.

In formula (I), X is group D or group C as defined beforehand.

Moreover, in formula (I), a is 0, 1 or 2, preferably 0 or 1; b is 0, 1 or 2, preferably 1 or 2; and a + b = 2. In formula (I), when n is 0 and a is 1 or 2, preferably when a is 1, group A and group D may be connected so as to form a cyclic structure. In preferred embodiment, when a is 1, then group A and group D may be connected so as to form a cyclic structure. In a more preferred embodiment, when groups A and D are connected to form a cyclic structure, the cyclic structure corresponds to the following Formula (I-a):

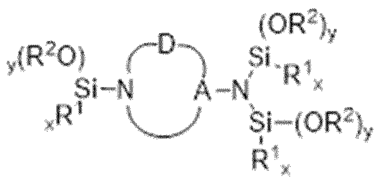

In formula (I-a), A, D, $R^1$, $R^2$, x and y are defined as for formula (I).

In a most preferred embodiment, the aminosilane compound according to the first aspect of the present invention corresponds to the following structures:

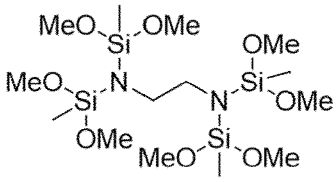
,
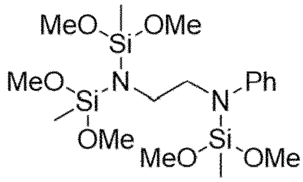
,

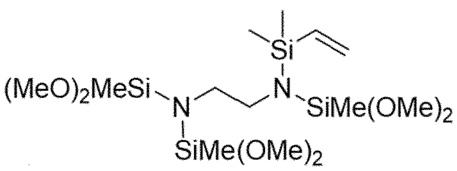
,
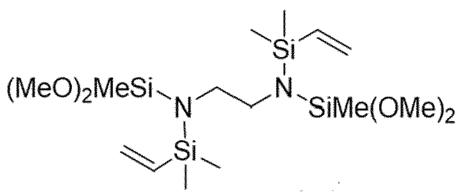
,

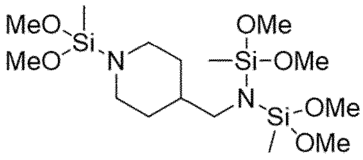

,

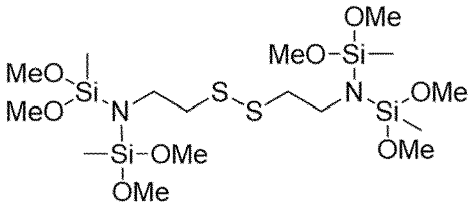

,

or

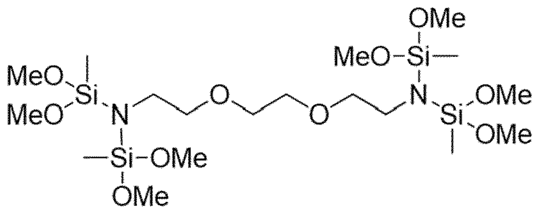

.

## Preparation of the aminosilane compound

The synthesis of an aminosilane according to the present invention constitutes a part of the common general knowledge of a person skilled in the art. For example, an amine precursor may be reacted with chloro-dimethoxymethylsilane in a presence of a base to form a product defined by Formula (1). An approach to comparable aminosilanes is also described in US20100317852A1 (Shin Etsu).

Chloro-dimethoxymethylsilane is prepared in-situ by the reaction of trichloro-methylsilane and isopropanol in the presence of bismuth (III) chloride. This reaction may be performed in analogous manner to the in-situ formation of chloro-dimethoxymethylsilane described in, e.g. R. Wakabayashi et al. J. Organomet. Chem. 2012, 716, 26 - 31 or M. Yoshikawa et al. Angew. Chem. Int. Ed. 2017, 56, 13990 - 13994.

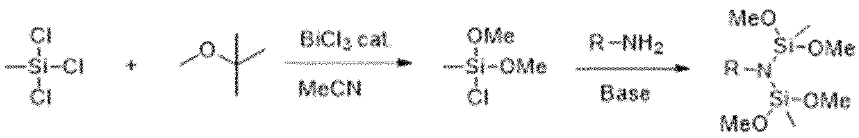


## Polymerization

The process for preparing the polymer according to the second aspect of the present invention comprises the following steps: (a) reacting a conjugated diene monomer and an aromatic vinyl monomer with an organometallic compound in a polymerization process to form a living polymer chain, (b) reacting the living polymer chain with an aminosilane compound of formula (I) as defined in the first aspect of the invention, and (c) optionally reacting the remaining living chain ends with a chain end modifier.

The polymer can generally be prepared via anionic, radical or transition metal-catalyzed polymerization, preferably prepared by anionic polymerization.

One or more aminosilane compounds of formula (I) may be used as a coupling agent on its own or in combination with one or more coupling agents other than the aminosilane compound of formula (I). Generally, the chain end modifier can be added at any moment, i.e. before, during or after the addition of the coupling agent, and the modification reaction is preferably carried out after the addition of the coupling agent. The total amount of coupling agents used influence the Mooney viscosity of the coupled polymer and is typically in the range of 0.001 to 4.5 milliequivalents per 100 grams of the polymer, for example 0.01 to about 1.5 milliequivalents per 100 grams of polymer. Preferably 0.1 to 1 milliequivalents, more preferably 0.15 to 0.7 milliequivalents of coupling agents per 100 grams of polymer are used.

The polymerization may be conducted in a solvent and may be carried out with one or more of chain end-modifying agents, coupling agents including modified coupling agents, randomizer compounds and polymerization accelerator compounds as subsequently described.

Further to the following specific disclosure, generally applicable directions on polymerization technologies including polymerization initiator compounds, polar coordinator compounds and accelerators (for increasing/changing the reactivity of the initiator, for randomly arranging aromatic vinyl monomers and/or for randomly arranging and/or changing

the concentration of 1,2-polybutadiene or 1,2-polyisoprene or 3,4-polyisoprene units introduced in the polymer); the amounts of each compound; monomer(s); and suitable process conditions are described in WO 2009/148932, the content of which is incorporated herein by reference in its entirety.

a) Conjugated dienes (conjugated diene monomers)

Exemplary conjugated diene monomers useful in the present invention include 1,3-butadiene, 2-($C_{1-5}$-alkyl)-1,3-butadiene such as isoprene (2-methyl-1,3-butadiene), 2,3-dimethyl-1,3-butadiene, 1,3-pentadiene, 2,4-hexadiene, 1,3-hexadiene, 1,3-heptadiene, 1,3-octadiene, 2-methyl-2,4-pentadiene, cyclopentadiene, 2,4-hexadiene, 1,3-cyclooctadiene, β-myrcene, terpinene, α-farnesene. A mixture of two or more conjugated dienes may be used. Preferred conjugated dienes include 1,3-butadiene and isoprene. In a preferred embodiment, the conjugated diene is 1,3-butadiene. The conjugated dienes may be used in a total amount of up to 99.99 wt.%, preferably 30 to 99.99 wt.%, based on the total weight of monomers used in the polymerization reaction.

b) Aromatic vinyl monomers

The aromatic vinyl monomers are compounds having only one vinyl group attached to an aromatic group. Exemplary aromatic vinyl monomers include styrene, $C_{1-4}$ alkyl-substituted styrene such as 2-methylstyrene, 3-methylstyrene, 4-methylstyrene, 2,4-dimethylstyrene, 2,4,6-trimethylstyrene, α-methylstyrene, 2,4-diisopropylstyrene and 4-tert-butylstyrene, stilbene, vinyl benzyl dimethylamine, (4-vinylbenzyl)dimethyl aminoethyl ether, N,N-dimethylaminoethyl styrene, tert-butoxystyrene and vinylpyridine. Two or more aromatic vinyl monomers may be used in combination. A preferred aromatic monovinyl monomer is styrene. The aromatic vinyl monomer(s) may be used, depending on the application, in a total amount of up to 70 wt.%, especially 40-70 wt.% or 0-40 wt.%, for example 15-40 wt.% or 2-15 wt.%, based on the total weight of monomers used in the polymerization reaction. In a preferred embodiment, the conjugated diene is 1,3-butadiene and the aromatic vinyl monomer is styrene.

c) Other monomers

Comonomers other than the conjugated diene monomer and the aromatic vinyl monomer, which may be used in preparing the polymer of the invention, include acrylic monomers such as acrylonitrile, acrylates, e.g., acrylic acid, methyl acrylate, ethyl acrylate, propyl acrylate and butyl acrylate, and methacrylates, e.g., methyl methacrylate, ethyl methacrylate, propyl methacrylate and butyl methacrylate. Comonomers also include aromatic di- or higher vinyl compounds which have two or more vinyl groups attached to an aromatic group, such as divinylbenzene, including 1,2-divinylbenzene, 1,3-divinylbenzene and 1,4-divinylbenzene (which may be used as an isomeric mixture of 1,2-/1,3-/1,4-divinylbenzene herein referred to as "DVB"). They may be used in total amounts of 1 wt.% or less (based on the total molar weight of the monomers used to make the polymer). In one preferred embodiment, 1,2-divinylbenzene is used in combination with styrene and butadiene or isoprene. Further monomers include, for example, vinyl aminosilanes as described in WO2015/055252, WO2016/131590, WO2017/216344 and WO2019/020752 or monomers as disclosed in WO2008108377A or WO2019216645A1, the contents of which are incorporated herein by reference in its entirety.

d) Initiator compounds

The polymerization process of the present invention is carried out in the presence of an initiator compound, and two or more initiator compounds may be used in combination. The initiator compound may be a monovalent or multivalent (divalent, trivalent, etc.) initiator compound, including dianionic initiators. Suitable initiator compounds include alkali metals, organoalkali metal compounds, a complex between an alkali metal and a polar compound, an oligomer containing an alkali metal, and Lewis acid-base complexes. Exemplary alkali metals include lithium, sodium, potassium, rubidium and cesium. Exemplary organoalkali metal compounds include ethyllithium, n-butyllithium, s-butyllithium, t-octyllithium, isopropyllithium, phenyllithium, cyclohexyllithium, 2-butyllithium, 4-phenylbutyllithium, t-butyldimethylsilyloxypropyllithium, dialkylaminopropyllithium, N-morpholinopropyllithium, lithiumdiisopropylamide, lithium piperidide, lithium pyrrolidide, dilithiated diphenylethylene compounds, multi-lithiated trivinyl benzene compounds, sodium biphenylide, sodium naphthalenide and potassium naphthalenide. Exemplary complexes between an alkali metal and a polar compound include a lithium-tetramethylethylenediamine complex, a lithium-tetrahydrofuran complex, a lithium-ditetrahydrofuranepropane complex, and the sodium and potassium analogues thereof. More preferably, the initiator compound is a mono- or dilithium alkyl, alkylaryl or aryl compound. Further useful initiators include the amino silane polymerization initiators described in WO 2014/040640 or/and the polymerization initiators described in WO 2015/010710, both incorporated herein by reference in its entirety. The total amount of the initiator(s), in particular the organolithium initiator(s), is adjusted depending on the monomer and target molecular weight. The total amount is typically from 0.05 to 5 mmol, preferably from

0.2 to 3 mmol per 100 grams of monomer.

e) Solvent

The polymerization can be conducted as a solution polymerization, wherein the formed polymer is substantially soluble in the reaction mixture, or as a suspension/slurry polymerization, wherein the formed polymer is substantially insoluble in the reaction medium. The terms "solution polymerization" and "suspension polymerization" or "slurry polymerization" are use with their conventional meaning in the art of polymerization. More preferably, the polymer is obtained in a solution polymerization. As the polymerization solvent, a hydrocarbon solvent is conventionally used, which does not deactivate the initiator, catalyst, active polymer chain or any further active entity or moiety. A combination of two or more solvents may also be used. Exemplary hydrocarbon solvents include aliphatic and aromatic solvents. Specific examples include (including all conceivable constitutional isomers): propane, butane, pentane, hexane, heptane, butene, propene, pentene, hexane, octane, benzene, toluene, ethylbenzene and xylene.

f) Chain end modifier

One or more chain end modifiers may be used in the polymerization reaction of the present invention for further controlling polymer properties by reacting with the terminal ends of the polymer chains in the polymer of the invention. Generally, silane-sulfide omega chain end modifiers such as disclosed in WO 2007/047943, WO 2009/148932, US 6,229,036 and US 2013/0131263, each incorporated herein by reference in its entirety, can be used for this purpose. Other chain end modifiers suitable for use in the present invention are those disclosed in WO 2014/040640 and WO 2015/010710 and the silane sulfide modifiers described in WO 2014/040639, each incorporated herein by reference in its entirety. In a preferred embodiment, 3-[Dimethyl(2-methyl-2-propyl)silyl]thiopropyl-(dimethoxy)(methyl)silane is used as chain end modifier. The chain end modifiers may be added intermittently (at regular or irregular intervals) or continuously during the polymerization, but are preferably added at a conversion rate of the polymerization of more than 80 percent and more preferably at a conversion rate of more than 90 percent. Preferably, a substantial amount/number of the polymer chain ends is not terminated prior to the reaction with the chain end modifier; that is, living polymer chain ends are present and are capable of reacting with the chain end modifier. Other chain end modifiers suitable for use in the present invention are those disclosed in WO2014/040639, WO2020179705A1, JP2020015881A and WO2019225824A1, the content of each of which is incorporated herein in its entirety.

g) Other coupling agents

For further controlling polymer molecular weight and polymer properties, one or more coupling agents other than the beforedescribed aminosilane compound can be used as an optional component in the process of the invention. Such coupling agents include tin tetrachloride ($SnCl_4$), tetrachloro silane, tetraethoxy silane, tetramethoxy silane, hexachlorodisilane (HCDS).

h) Randomizer compounds

Randomizer compounds as conventionally known in the art (also known as polar coordinator compounds) may optionally be added either to the monomer mixture or polymerization reaction, in order to adjust the microstructure (i.e. the content of vinyl bonds) of the conjugated diene part of the polymer, or to adjust the composition distribution of any aromatic vinyl monomer and of the vinyl bonds in the polymer chain. A combination of two or more randomizer compounds may be used. Randomizer compounds useful for the invention are generally exemplified by Lewis base compounds. Suitable Lewis bases for use in the present invention are, for example, ether compounds such as diethyl ether, di-n-butyl ether, ethylene glycol diethyl ether, ethylene glycol dibutyl ether, diethylene glycol dimethyl ether, propylene glycol dimethyl ether, propylene glycol diethyl ether, propylene glycol dibutyl ether, ($C_1$-$C_8$ alkyl)tetrahydrofurylethers (including methyltetrahydrofurylether, ethyltetrahydrofurylether, propyltetrahydrofurylether, butyltetra-hydrofurylether, hexyltetrahydrofurylether and octyltetrahydrofurylether), tetrahydrofuran, 2,2-(bistetrahydrofuryl)propane (Randomizer 2), bistetrahydrofurfurylformal, methyl ether of tetrahydrofurfuryl alcohol, ethyl ether of tetrahydrofurfuryl alcohol, butyl ether of tetrahydrofurfuryl alcohol, $\alpha$-methoxytetrahydrofuran, dimethoxybenzene and dimethoxyethane, and tertiary amines such as triethylamine, pyridine, N,N,N',N'-tetramethyl ethylenediamine (randomizer 1), dipiperidinoethane, methyl ether of N,N-diethylethanolamine, ethyl ether of N,N-diethylethanolamine, N,N-diethylethanolamine and dimethyl N,N-tetrahydrofurfuryl amine. Examples of preferred randomizer compounds are identified in WO 2009/148932, incorporated herein by reference in its entirety. The randomizer compound is typically added at a molar ratio of randomizer compound to initiator compound of from 0.012:1 to 10:1, preferably from 0.1:1 to 8:1 and more preferably from 0.25:1 to about 6:1.

i) Accelerator compounds

The polymerization can optionally include accelerator compounds to increase the reactivity of the initiator (and, thus, to increase the polymerization rate), to randomly arrange aromatic vinyl monomers introduced into the polymer, or to provide a single chain of aromatic vinyl monomers, thus influencing the distribution of aromatic vinyl monomers in a living anionic copolymer. Examples of accelerators include sodium alkoxides or sodium phenoxides and potassium alkoxides or potassium phenoxides, preferably potassium alkoxides or potassium phenoxides, such as potassium isopropoxide, potassium t-butoxide, potassium t-amyloxide, potassium n-heptyloxide, potassium benzyloxide, potassium phenoxide; potassium salts of carboxylic acids, such as isovaleric acid, caprylic acid, lauric acid, palmitic acid, stearic acid, oleic acid, linolenic acid, benzoic acid, phthalic acid and 2-ethyl hexanoic acid; potassium salts of organic sulfonic acids, such as dodecyl benzenesulfonic acid, tetradecyl benzenesulfonic acid, hexadecyl benzenesulfonic acid and octadecyl benzenesulfonic acid; and potassium salts of organic phosphorous acids, such as diethyl phosphite, diisopropyl phosphite, diphenyl phosphite, dibutyl phosphite, and dilauryl phosphite. Such accelerator compounds may be added in a total amount of from 0.005 to 0.5 mol per 1.0 gram atom equivalent of initiator.

j) Dosing

The described coupling agents, including the coupling agent of the invention may be added in a single step (dosing of 100%), or in more than one step (dosing of X%+Y%+Z%+... = 100%) before full conversion. The one or more aminosilane compounds of formula (I) and the one or more coupling agents other than the aminosilane compound may be added together in the single step or in separate steps. In the case of dosing in more than one step, the coupling agents may be added together, sequentially or may be added together in at least one step and sequentially in at least another step.

**Polymer**

The polymer according to the third aspect of the invention is obtainable by the process of the second aspect of the present invention, namely by a process comprising steps (a) to (c) as already described.

For example, the polymer according to the third aspect of the invention contains the following structure:

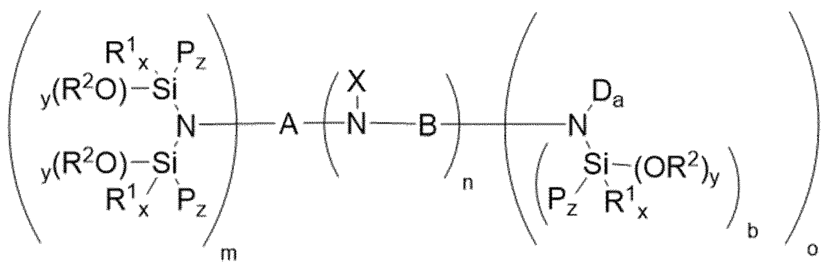

wherein A, B, $R^1$, $R^2$, D, a, b, m, n and o are defined as for the first aspect of the invention; X is $SiR^1_x(OR^2)_yP_z$ or a $C_1$-$C_{10}$ hydrocarbon; P is a conjugated diene polymer; x is 0, 1, 2, or 3, preferably 0 or 1; y is 0, 1 or 2, preferably 1 or 2; z is 1 or 2; and x + y +z = 3.

In a preferred embodiment, the polymer is an elastomeric polymer.

In preferred embodiments, the polymer of the invention is an SSBR (solution styrene butadiene rubber) with a preferred vinyl content (vinyl content = the content of 1,2-butadiene fraction based on BR fraction of the polymer or copolymer) of 5-80 wt.%, preferred 10-75 wt.%, for example 10-30 wt.%, 30-50 wt.% or 50-70 wt%, a styrene content (depending on the specific application) of 40-70 wt.%, or 15-40 wt.%, or 2-15 wt.%; a PBR (polybutadiene rubber) with a vinyl content of <15 wt.%; or 15-40 wt.%, or 40-80 wt.%; a PIR (polyisoprene rubber); an SSIR (solution styrene isoprene rubber); or an SSIBR (solution styrene isoprene butadiene rubber); more preferably an SSBR or PBR; even more preferably the elastomeric polymer is an SSBR. In case of an SSBR, the elastomeric polymer is characterized by a glass transition temperature (Tg, determined by DSC) of -90 to 0°C, preferably -85 to -5°C, more preferably -80 to -15°C. Preferred embodiments for passenger car tire or truck tire applications include -80 to -60°C, -60 to -40°C and -40 to -15°C.

In preferred embodiments, prior to coupling and chain-end modification, the polymer of the invention exhibits a molecular weight peak (measured by GPC) in the range of 800 to 10,000 g/mol or 10,000 to 50,000 g/mol or 50,000 to 120,000 g/mol or 120,000 to 250,000 g/mol or 250,000 to 400,000 g/mol or 400,000 to 800,000 g/mol.

In the present embodiments, the double bond of the conjugated diene-based polymer obtained in accordance with the above-described process can be totally or partially converted into a saturated hydrocarbon, e.g. through further hydrogenation in an inert solvent. This hydrogenation can improve the thermal resistance and weatherability, and prevent

degradation of a resulting product in processing at high temperatures. Thus, better performance is exerted in various applications including automobile applications.

The ratio of hydrogenation of unsaturated double bonds on the basis of a conjugated diene compound (also referred to as "hydrogenation ratio", simply) is not particularly limited, and can be arbitrarily selected in accordance with assumed purpose. In the case of use for a vulcanized rubber, it is preferred that the double bonds in the conjugated diene portion be partially remained. From this viewpoint, the hydrogenation ratio of the conjugated diene portion in the polymer is preferably 3.0% or more and 95% or less, more preferably 10.0% or more and 90% or less, and further preferably 20% or more and 85% or less. The hydrogenation ratio of aromatic double bonds on the basis of an aromatic vinyl compound in the copolymer of a conjugated diene compound and an aromatic vinyl compound is not particularly limited. However, the hydrogenation ratio of aromatic double bonds on the basis of an aromatic vinyl compound in the copolymer of a conjugated diene compound and an aromatic vinyl compound is preferably 50% or less, more preferably 30% or less, and further preferably 20% or less. The hydrogenation ratio can be determined by using a nuclear magnetic resonance apparatus (NMR).

The method for hydrogenation is not particularly limited, and known methods can be used. Examples of suitable methods for hydrogenation include a method in which a polymer solution is bubbled with gaseous hydrogen to hydrogenate in the presence of a catalyst. Examples of the catalyst include heterogeneous catalysts such as catalysts including a noble metal supported on a porous inorganic material; and homogeneous catalysts such as catalysts derived by reaction of a solubilized salt of nickel, cobalt, or the like with an organoaluminum or the like, and catalysts with a metallocene such as titanocene. Among them, titanocene catalysts are preferred from the viewpoint that particularly mild hydrogenation conditions can be selected. Hydrogenation of aromatic groups can be performed by using a noble metal-supported catalyst.

Specific examples of hydrogenation catalysts include, but not limited to, (1) supporting-type heterogeneous hydrogenation catalysts with a metal such as Ni, Pt, Pd, and Ru supported on carbon, silica, alumina, diatomaceous earth, or the like; (2) what is called Ziegler hydrogenation catalysts with a transition metal salt such as an organic acid salt or acetylacetone salt of Ni, Co, Fe, Cr, or the like and a reductant such as an organoaluminum; and (3) what is called organometal complexes such as organometal compounds of Ti, Ru, Rh, Zr, or the like. Further examples of hydrogenation catalysts include hydrogenation catalysts described in Japanese Patent Publication No. 42-8704, Japanese Patent Publication No. 43-6636, Japanese Patent Publication No. 63-4841, Japanese Patent Publication No. 1-37970, Japanese Patent Publication No. 1-53851, Japanese Patent Publication No. 2-9041, and Japanese Patent Laid-Open No. 8-109219. Preferred examples of hydrogenation catalysts include a reaction mixture of a titanocene compound and a reducing organometal compound.

**Non-vulcanized polymer composition**

The non-vulcanized (non-cured) polymer composition of the fourth aspect of the present invention comprises the above-described polymer according to the invention and one or more additives.

For example, the one or more additives are selected from extender oils, stabilizers and further polymers, including polymer oils ($M_p$ (real) = 800 to 50,000 g/mol measured by GPC), (which are not the polymers of the invention). Such further polymers include what is conventionally referred in this field to as oligomers. Liquid polymers or polymer oils or oligomers are, e.g., homo- or copolymers of styrene, isoprene, butadiene or farnesene.

In one embodiment, the polymer composition comprises one or more fillers. In another embodiment, the polymer composition additionally comprises one or more vulcanizing agents. In a preferred embodiment, the polymer composition comprises one or more fillers and one or more vulcanizing agents.

In one embodiment, the non-vulcanized polymer composition is obtained by conventional work-up of the reaction mixture obtained in the polymerization process. Work-up means the removal of the solvent using steam stripping or vacuum evaporation techniques.

In another embodiment, the non-vulcanized polymer composition of the invention is obtained as a result of a further mechanical mixing process involving the worked-up reaction mixture (including the polymer of the invention), preferably in the form of a rubber bale (i.e. the product of a conventional compounding process in an internal mixer and /or by means of a two-roll mill), and at least one filler.

The following components are conventionally added in non-vulcanized compositions used in tires: extender oils, stabilizers, fillers, further polymers including polymer oils ($M_p$ (real) = 800 to 50,000 g/mol measured by GPC).

a) Extender oils

In one embodiment, the polymer composition of the present invention comprises the polymer of the invention in combination with one or more oils, especially mineral oils or extender oils from natural (non-fossil) sources (such as sunflower oil, rapeseed oil, soy oil, tall oil or castor oil). For representative examples and classification of oils see, e.g., WO

2009/148932 and US 2005/0159513, each of which is incorporated herein by reference in its entirety.

Such oils include, for instance, conventionally known extender oils such as aromatic, naphthenic and paraffinic extender oils, for example MES (mild extraction solvate), TDAE (treated distillate aromatic extract), rubber-to-liquid (RTL) oils, biomass-to-liquid (BTL) oils, factices, extender resins or liquid polymers (such as liquid BR) having a median molecular weight (determined via GPC according to BS ISO 11344:2004) of from 800 to 50,000 g/mol. When using a mineral oil as the extender oil, it is preferably one or more selected from DAE (Distillated Aromatic Extracts), RAE (Residual Aromatic Extract), TDAE, MES and naphthenic oils. The aforementioned oils comprise different concentrations of polycyclic aromatic compounds, paraffinics, naphthenics and aromatics, and have different glass transition temperatures. The above-mentioned types of oil have been characterized in "Kautschuk, Gummi, Kunststoffe", vol. 52, pages 799-805. In some embodiments, MES, RAE and TDAE are preferred extender oils for rubber.

The one or more oils can be added to the polymer prior to or after the termination of the polymerization process. When the extender oil is added to the polymer solution, the timing of addition should preferably be after modification of the polymer or termination of the polymerization, for example after the addition of the modifying agent or polymerization termination agent. After the addition of extender oil, the oil-extended polymer composition can be obtained by separating any polymerization solvent from the polymer by means of a direct drying method or steam stripping, drying the rubber using a vacuum dryer, hot-air dryer, roller and the like.

The polymer composition may contain one or more oils in a total amount of from 0 to 70 phr, preferably 0.1 to 60 phr, more preferably 0.1 to 50 phr. When liquid polymers are used as extender oils in the polymer composition of the present invention, they are not taken into account when calculating the composition of the polymer matrix.

In another embodiment, the oil is added to the "solvent-free" polymer in a mechanical mixer together with preferably at least one filler, and at least one further polymer.

b) Stabilizers

One or more stabilizers (also referred to as "antioxidants") can optionally be added to the polymer prior to or after the termination of the polymerization process to prevent the degradation of the polymer by molecular oxygen. Antioxidants based on sterically hindered phenols, such as 2,6-di-tert-butyl-4-methylphenol, 6,6'-methylenebis(2-tert-butyl-4-methylphenol), Iso-octyl-3-(3,5-di-tert-butyl-4-hydroxyphenyl) propionate, hexamethylenebis[3-(3,5-di-tert-butyl-4-hydroxyphenyl)-propionate], octadecyl-3-(3,5-di-tert-butyl-4-hydroxyphenyl) propionate, isotridecyl-3-(3,5-di-tert-butyl-4-hydroxyphenyl) propionate, 1,3,5-trimethyl-2,4,6-tris(3,5-di-tert-butyl-4-hydroxybenzyl) benzene, 2,2'-ethylidenebis-(4,6-di-tert-butylphenol), tetrakis[methylene-3-(3,5-di-tert-butyl-4-hydroxyphenyl)propionate]methane, 2-[1-(2-hydroxy-3, 5-di-tert-pentylphenyl)ethyl]-4, 6-di-tert-pentylphenyl acrylate and 2-tert-butyl-6-(3-tert-butyl-2-hydroxy-5-methylbenzyl)-4-methylphenyl acrylate, and antioxidants based on thio-esters, such as 4,6-bis(octylthiomethyl)-o-cresol and pentaerythrityl tetrakis(3-laurylthiopropionate), are typically used. Other stabilizers are phosphite based (e.g. tris[4-(1,1-dimethylpropyl)phenyl] phosphite, bis[2,4-bis(2-methylbutan-2-yl)phenyl] [4-(2-methylbutan-2-yl)phenyl] phosphite, bis[4-(2-methylbutan-2-yl)phenyl][2,4-bis(2-methylbutan-2-yl)phenyl] phosphite, tris[2,4-bis(2-methylbutan-2-yl)phenyl] phosphite octadecyl 3-(3,5-di-tert-butyl-4-hydroxyphenyl)propionate). Further examples of suitable stabilizers can be found in F. Röthemeyer, F. Sommer, Kautschuk Technologie, 2nd ed., (Hanser Verlag, 2006) pages 340-344, and references cited therein.

c) Further polymers

Apart from the polymer of the invention, extender oil(s), filler(s), etc., the polymer composition of the invention may additionally contain further polymers, especially further elastomeric polymers. Further polymers may be added in the form of a solution to a solution of the polymer of the invention prior to work up of the polymer blend or may be added during a mechanical mixing process.. Further polymers as referred to herein are polymers which are not in accordance with the polymer of the invention. Such further polymers include what is conventionally referred to as oligomers in this field.

d) Fillers

The polymer composition of the present invention, which optionally comprises one or more extender oils as defined above, may further comprise one or more fillers. One or more fillers can be added to the polymer prior to or after the termination of the polymerization process. Examples of suitable fillers include carbon black (including electroconductive carbon black), carbon nanotubes (CNT) (including discrete CNT, hollow carbon fibers (HCF) and modified CNT carrying one or more functional groups, such as hydroxyl, carboxyl and carbonyl groups), graphite, graphene (including discrete graphene platelets), silica, carbon-silica dual-phase filler, clays (layered silicates, including exfoliated nanoclay and organoclay), calcium carbonate, magnesium carbonate, magnesium oxide, titanium dioxide, rubber gels, lignin, amorphous fillers, such as glass particle-based fillers, starch-based fillers, and combinations thereof. Further examples of

suitable fillers are described in WO 2009/148932, which is fully incorporated herein by reference.

In the polymer composition of the present invention, the one or more fillers are preferably selected from carbon black, carbon nanotubes, graphite, graphene, silica, carbon-silica dual-phase filler, clays calcium carbonate, magnesium carbonate, lignin, glass particle-based fillers and starch-based fillers, preferably the filler is carbon black or silica or may be a combination thereof. More preferably, the filler is silica.

As the carbon black, any type of carbon black conventionally known to a person of skill in the art may be used. In one embodiment, the carbon black has an iodine number according to ASTM D 1510 of 20 to 250 mg/g, preferably 30 to 180 mg/g, more preferably 40 to 180 mg/g, and even more preferably 40 to 130 mg/g, and a DBP number according to ASTM D 2414 of 80 to 200 ml/100 g, preferably 100 to 200 ml/100 g, more preferably 115 to 200 ml/100 g (the DBP number determines the specific absorption volume of carbon black or of any bright filler by means of dibutyl phthalate).

Any type of silica conventionally known to a person of skill in the art and suitable as filler for tire rubber blends may be used. It is particularly preferred to use highly dispersed, precipitated silica having an nitrogen surface area (BET surface area; according to DIN ISO 9277 and DIN 66132) of 35 to 350 $m^2/g$, preferably 35 to 260 $m^2/g$, more preferably 100 to 260 $m^2/g$ and even more preferably 130 to 235 $m^2/g$, and having a CTAB surface area (according to ASTM D 3765) of 30 to 400 $m^2/g$, preferably 30 to 250 $m^2/g$, more preferably 100 to 250 $m^2/g$ and even more preferably 125 to 230 $m^2/g$. Such silica results, e.g. in rubber blends for tire treads, in particularly beneficial physical properties of the vulcanizates. In addition, it may bring about advantages in the processing of the blend, namely by reducing the time required for blending, while maintaining product properties, thus improving productivity. Useful silicas include those of the type Ultrasil® VN3 (trademark of Evonik Industries) as well as highly dispersed types, so-called HD silicas (e.g. Zeosil® 1165 MP of Rhodia).

e) Vulcanizing agents and vulcanizing accelerators

The polymer composition of the present invention may optionally further comprise one or more vulcanizing agents. Any vulcanizing agent conventionally used in the manufacture of rubber products can be used in the invention, and a combination of two or more vulcanizing agents may be used.

Sulfur, sulfur-containing compounds acting as sulfur donors such as dithiols, sulfur accelerator systems and peroxides are the most common vulcanizing agents. Examples of sulfur-containing compounds acting as sulfur donors include dithiodimorpholine (DTDM), tetramethylthiuram disulfide (TMTD), tetraethyl thiuram disulfide (TETD) and dipentamethylene thiuram tetrasulfide (DPTT). Examples of sulfur accelerators include amine derivates, guanidine derivates, aldehydeamine condensation products, thiazoles, xanthogenates, thiuram sulfides, dithiocarbamates and thiophosphates. It is preferably to use one or more sulfonamide accelerators selected from N-cyclohexyl 2-benzothiazol sulfenamide (CBS), N,N-dicyclohexyl benzothiazole 2-sulfenamide (DCBS), benzothiazyl 2-sulfenemorpholide (MBS) and N-tert-butyl 2-benzothiazyl sulfenamide (TBBS). Further crosslinking systems such as available under the trade names Vulkuren® (1,6-bis(N,N-dibenzyl thiocarbamoyldithio)-hexane; Lanxess), Duralink® or Perkalink® (1,3-bis(citraconimidomethyl)benzene; Lanxess) or disclosed in WO 2010/049261 may be added to the polymer composition. Examples of peroxides include di-tert-butyl-peroxides, di-(tert-butyl-peroxy-trimethyl-cyclohexane), di-(tert-butyl-peroxy-isopropyl-)benzene, dichlorobenzoyl peroxide, dicumylperoxides, tert-butyl-cumyl-peroxide, dimethyl-di(tert-butyl-peroxy)hexane, dimethyl-di(ter-butyl-peroxy)hexine and butyl-di(tert-butyl-peroxy)valerate *(*Rubber Handbook, SGF, The Swedish Institution of Rubber Technology 2000*).*

A vulcanizing accelerator of the sulfene amide-type, guanidine-type or thiuram-type can be used together with a vulcanizing agent as required.

In addition, the polymer composition of the invention may contain conventional additives and vulcanization auxiliaries in proportions conventionally used. Such additives include:

a) aging inhibitors such as N-phenyl N'-(1,3-dimethylbutyl)-p-phenylenediamine (6PPD), N,N'-diphenyl-p-phenylenediamine (DPPD), N,N'-ditolyl-p-phenylenediamine (DTPD), N-isopropyl N'-phenyl-p-phenylenediamine (IPPD), 2,2,4-trimethyl 1,2-dihydrochinolin (TMQ),
b) activators such as zinc oxide and fatty acids (e.g. stearic acid);
c) waxes;
d) resins, especially adhesive resins;
e) mastication additives such as 2,2'-dibenzamidodiphenyldisulfide (DBD); and
f) processing additives such as zinc soaps and fatty acid esters and their derivatives.

Zinc oxide (zinc white) is preferably used as a component of the sulfur accelerator system.

Vulcanizing agents are typically added to the polymer composition in a total amount of from 0.5 to 10 parts by weight or, in some embodiments, 1 to 6 parts by weight per 100 parts by weight of the polymer. Examples of vulcanizing accelerators and amounts thereof relative to the polymer are given in WO 2009/148932, which is incorporated herein by reference in its entirety.

## Vulcanized polymer composition

The vulcanized polymer composition of the fifth aspect of the present invention is obtainable by vulcanizing a polymer composition of the invention comprising one or more vulcanizing agents. The method of making the vulcanized polymer composition of the sixth aspect of the present invention comprises a step of vulcanizing the polymer composition of the invention under conditions and with machinery conventionally known in the art.

## Article

Since the vulcanized polymer compositions of the invention exhibit low rolling resistance and improved wet grip performance, as well as suitable mechanical properties, and can be favorably used, e.g., in a variety of different SBR/BR grades having different microstructures, they are well suited for use in manufacturing, e.g., tires or parts of tires including for example: tire treads, side walls and tire carcasses as well as other industrial products such as belts, hoses, vibration dampers and footwear components. Thus, the article of the seventh aspect of the present invention comprises at least one component formed from the vulcanized polymer composition of the invention. The article may be, for instance, a tire, including parts thereof such as a tire tread, a tire side wall and a tire carcass, a belt, a gasket, a seal, a hose, a vibration damper, a footwear component, such as a shoe sole, a golf ball or a hose. Preferably, the article is a tire or a part thereof, more preferably the article is a summer, winter, all-weather passenger car tire or truck tires.

## EXAMPLES

The present invention is explained in more detail by way of following examples, which are not intended to be limiting the present invention.

### 1) Synthesis and Characterization of Coupling Agents (CAs)

Coupling Agent **CA1**

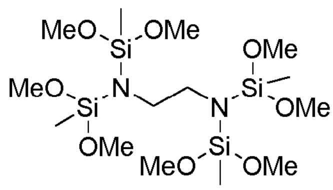

Chemical Formula: $C_{14}H_{40}N_2O_8Si_4$

Molecular Weight: 476,82

Bismuth(III) chloride (0.47 g, 1.5 mmol) and anhydrous methyl tert-butyl ether (26.5 g, 300 mmol) were dissolved in anhydrous acetonitrile (30 ml). Trichloromethylsilane (22.4 g, 150 mmol) was added at 0°C, and the resulting solution was stirred overnight at ambient temperature. The solution was cooled down to 0°C and then 1,8-Diazabicyclo[5.4.0] undec-7-ene (18.7 g, 123 mmol) was added. Finally, ethylene diamine (1.80 g, 30 mmol) was added and the mixture was stirred overnight at ambient temperature. GC-aliquots were taken to monitor the conversion. After filtration, the solvent and all volatiles were removed under reduced pressure. After addition of cyclohexane and filtration, the solvent was removed under reduced pressure and the residue was distilled fractionally to yield a liquid of CA1 (N,N,N',N'-tetra[(dimethoxy)(methyl)silyl]ethylenediamine, 8.06 g, 56 %) with 91 % purity (GC).

**$^1$H NMR** (400 MHz, 20°C, $C_6D_6$): $\delta$ = 3.46 (s, 24 H, 8x OMe), 3.20 (s, 4 H, 2x $CH_2$), 0.37 (s, 12 H, 4x Si-$CH_3$) ppm. **$^{13}$C NMR** (101 MHz, 20°C, $C_6D_6$): $\delta$ = 49.88 ($OCH_3$), 45.61 ($CH_2$), -5.24 ($SiCH_3$) ppm. **GC-MS** (EI, 70 eV): m/z (%) = 474 ($[M-2H]^+$, 1), 305 (3), 238 ($[CH_2N(Si(OMe)_2Me)_2]^+$, 100), 208 (31), 105 ($[Si(OMe)_2Me]^+$, 11), 75 (9).

Coupling Agent **CA2**

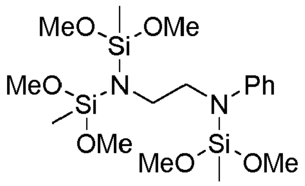

Chemical Formula: $C_{17}H_{36}N_2O_6Si_3$

Molecular Weight: 448,74

Bismuth(III) chloride (1.35 g, 4.3 mmol) was dissolved in anhydrous acetonitrile (200 ml). Trichloromethylsilane (50.5 ml, 430 mmol) was added to the solution at 0 °C, and anhydrous methyl tert-butyl ether (107.5 ml, 903 mmol) was added dropwise to the mixture. The solution was stirred overnight at ambient temperature. Then, the solution was cooled down to -40°C and anhydrous trimethylamine (48 ml, 342 mmol) was added. Finally, N-phenylethylene diamine (10 ml, 76.4 mmol) was added and the resulting suspension was allowed to reach room temperature overnight. After filtration, the solvent and all volatiles were removed under reduced pressure and the residue was distilled fractionally to yield a pale yellow liquid of **CA2** (N-phenyl-N,N',N'-tri[(dimethoxy)(methyl)-silyl]ethylenediamine, 16.6 g, 45 %) with 95 % purity ($^1$H-NMR).

**$^1$H NMR** (400 MHz, 20°C, $C_6D_6$): $\delta$ = 7.50-7.45 (m, 2 H, 2x CH), 7.28-7.22 (m, 2 H, 2x CH), 6.90-6.84 (m, 1 H, CH), 3.71-3.65 (m, 2 H, $CH_2$), 3.41 (s, 12 H, 4x OMe), 3.40 (s, 6 H, 2x OMe), 3.22-3.15 (m, 2 H, $CH_2$) 0.31-0.22 (m, 9 H, 3x $SiCH_3$) ppm. **$^{13}$C NMR** (101 MHz, 20°C, $C_6D_6$): $\delta$ = 148.2 (Cq) 129.3 (CH), 120.3 (CH), 119.6 (CH), 49.89 ($OCH_3$), 49.21 ($CH_2$), 42.14 ($CH_2$), -5.16 ($SiCH_3$), -5.84 ($SiCH_3$) ppm. GC-**MS** (EI, 70 eV): m/z (%) = 448 (M', 7), 281 (7), 238 ([$CH_2N(Si(OMe)_2Me)_2$]$^+$, 100), 210 (([$CH_2NPh(Si(OMe)_2Me)$]$^+$, 93), 208 (54), 105 ([$Si(OMe)_2Me$]$^+$, 54), 75 (28).

<u>Coupling Agent **CA3**</u>

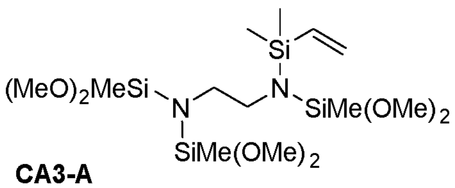

**CA3-A**

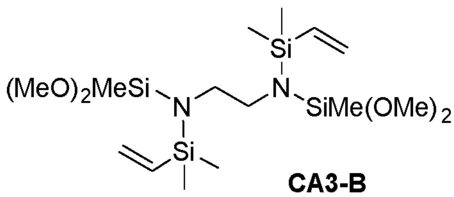

**CA3-B**

Chemical Formula: $C_{15}H_{40}N_2O_6Si_4$

Chemical Formula: $C_{16}H_{40}N_2O_4Si_4$

Molecular Weight: 456,83 Molecular Weight: 436,85

Bismuth(III) chloride (0.43 g, 1.4 mmol) and anhydrous methyl tert-butyl ether (24.0 g, 272 mmol) were dissolved in anhydrous acetonitrile (27 ml). At 0°C, trichloromethylsilane (20.3 g, 136 mmol) was added and the resulting solution was stirred overnight at ambient temperature. The solution was cooled down to -20°C and 1,8-Diazabicyclo[5.4.0] undec-7-ene (25.6 g, 168 mmol), Chlorodimethylvinylsilane (12.1 g, 100 mmol) and 20 ml dichloromethane were added. Finally, ethylene diamine (2.40 g, 40 mmol) was added and the mixture was stirred for 4 h at -20°C. GC-aliquots monitor conversion. After addition of 40 ml cyclohexane and filtration, the solvent and all volatiles were removed under reduced pressure. After second addition of cyclohexane and filtration, the solvent was removed under reduced pressure and the residue was distilled fractionally to yield a liquid of **CA3** (9.89 g, 55 %) being a mixture of **CA3-A** (45%), **CA3-B** (40%), **CA1** (10%) and corresponding tris(vinylsilane) derivative (5%,GC).

**CA3-A** (N-(dimethyl)(vinhyl)silyl-N,N',N'-tri[(dimethoxy)(methyl)silyl]ethylenediamine)

**GC-MS** (EI, 70 eV): m/z (%) = 456 (M$^+$, 1), 305 (5), 238 ([$CH_2N(Si(OMe)_2Me)_2$]$^+$, 86), 218 ([$CH_2N(Si(OMe)_2Me)(SiMe_2$ (vinyl)]$^+$, 100), 208 (27), 198 (11), 188 (8), 105 ([$Si(OMe)_2Me$]$^+$, 14), 75 (11).

**CA3-B** (N,N'-di[(dimethyl)(vinhyl)silyl]-N,N'-di[(dimethoxy)(methyl)silyl]ethylenediamine)

**GC-MS** (EI, 70 eV): m/z (%) = 436 (M$^+$, 1), 305 (3), 218 ([$CH_2N(Si(OMe)_2Me)(SiMe_2(vinyl)$]$^+$, 100), 188 (13), 105 ([$Si(OMe)_2Me$]$^+$, 11), 75 (9).

**CA1** (N,N,N',N'-tetra[(dimethoxy)(methyl)silyl]ethylenediamine)
**GC-MS** (EI, 70 eV): m/z (%) = 474 ($[M-2H]^+$, 1), 305 (3), 238 ($[CH_2N(Si(OMe)_2Me)_2]^+$, 100), 208 (31), 105 ($[Si(OMe)_2Me]^+$, 11), 75 (9).

Coupling Agent **CA4**

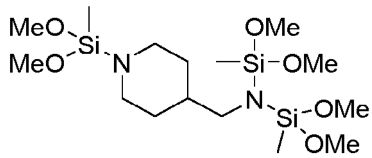

Chemical Formula: $C_{15}H_{38}N_2O_6Si_3$

Molecular Weight: 426,73

Bismuth(III) chloride (0.50 g, 1.6 mmol) and anhydrous methyl tert-butyl ether (28.2 g, 320 mmol) were dissolved in anhydrous acetonitrile (32 ml). At 0°C, trichloromethylsilane (23.9 g, 160 mmol) was added and the resulting solution was stirred overnight at ambient temperature. The solution was cooled down to 0°C and 1,8-Diazabicyclo[5.4.0]undec-7-ene (20.1 g, 132 mmol) was added. Finally, 4-(aminomethyl)piperidine (4.57 g, 40 mmol) was added and the mixture was stirred for 4 h at ambient temperature. GC-aliquots monitor conversion. After filtration, the solvent and all volatiles were removed under reduced pressure. After addition of cyclohexane and filtration, the solvent was removed under reduced pressure and the residue was distilled fractionally to yield a light yellow liquid of **CA4** (N,N',N'-tri[(dimethoxy)(methyl) silyl]-4-(aminomethyl)piperidine, 8.29 g, 49 %) with 91 % purity (GC).

**bp** = 128-131°C ($2.7*10^{-3}$ mbar). **$^1$H NMR** (400 MHz, 20°C, $C_6D_6$): $\delta$ = 3.32-3.24 (m, 18 H, 6x OMe), 2.80 (d, *J* = 4.0 Hz, 2 H), 2.53 (dt, *J* = 2.0, 13.0 Hz, 2 H), 1.70-1.56 (m, 3 H), 0.93 (dq, *J* = 3.5, 12.0 Hz, 2 H), 0.15 (s, 6 H, 2x Si-$CH_3$), 0.01 (s, 3 H, Si-$CH_3$) ppm. **$^{13}$C NMR** (101 MHz, 20°C, $C_6D_6$): $\delta$ = 50.89 ($OCH_3$), 50.83 ($OCH_3$), 50.35 ($NCH_2$), 46.06 ($NCH_2$), 41.75 (CH), 33.82 ($CH_2$), -3.92 ($SiCH_3$), -6.12 ($SiCH_3$) ppm. **GC-MS** (EI, 70 eV): m/z (%) = 426 ($M^+$, 5), 238 ($[CH_2N(Si(OMe)_2Me)_2]^+$, 100), 208 (57), 200 (10), 173 (8), 105 ($[Si(OMe)_2Me]^+$, 48).

Coupling Agent **CA5**

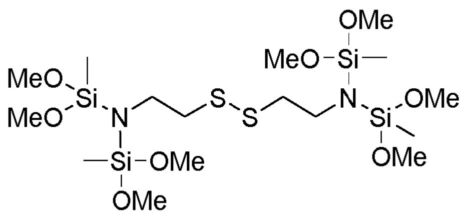

Chemical Formula: $C_{16}H_{44}N_2O_8S_2Si_4$

Molecular Weight: 568,99

Bismuth(III) chloride (0.63 g, 2.0 mmol) and anhydrous methyl tert-butyl ether (35.3 g, 400 mmol) were dissolved in anhydrous acetonitrile (40 ml). At 0°C, trichloromethylsilane (29.9 g, 200 mmol) was added and the resulting solution was stirred overnight at ambient temperature. The solution was cooled down to 0°C and 1,8-Diazabicyclo[5.4.0]undec-7-ene (37.8 g, 248 mmol) was added. Finally, cystamine dihydrochloride (9.01 g, 40 mmol) was added and the mixture was stirred overnight at ambient temperature. GC-aliquots were taken to monitor the conversion. After filtration, the solvent and all volatiles were removed under reduced pressure. After addition of cyclohexane and filtration over charcoal and $MgSO_4$, the solvent was removed under reduced pressure to yield yellow liquid of **CA5** (N,N,N',N'-tetra[(dimethoxy)(methyl) silyl]-2,2'-dithiobis(ethylamine), 10.7 g, 47 %) with 90 % purity (GC).

**$^1$H NMR** (400 MHz, 20°C, $C_6D_6$): $\delta$ = 3.12-3.18 (m, 4 H, 2x $CH_2$), 3.14 (s, 24 H, 8x OMe), 2.80-2.74 (m, 4 H, 2x $CH_2$), 0.01 (s, 12 H, Si-$CH_3$) ppm. **$^{13}$C NMR** (101 MHz, 20°C, $C_6D_6$): $\delta$ = 51.35 ($OCH_3$), 44.54 ($CH_2$), 43.00 ($CH_2$), -3.74

($SiCH_3$) ppm. **GC-MS** (EI, 70 eV): m/z (%) = 568 ($M^+$, 1), 284 ([Cysteamin-H]$^+$, 6), 252 (33), 238 ([$CH_2N(Si(OMe)_2Me)_2$]$^+$, 100), 208 (33), 105 ([$Si(OMe)_2Me$]$^+$, 18), 75 (32).

Coupling Agent **CA6**

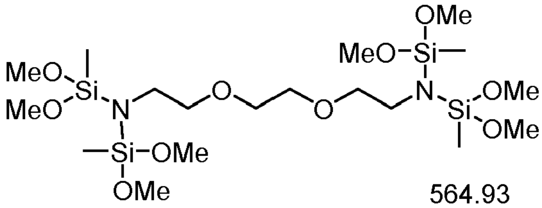

564.93

Chemical Formula: $C_{18}H_{48}N_2O_{10}Si_4$

Molecular Weight: 564,93

Bismuth(III) chloride (0.63 g, 2.0 mmol) and anhydrous methyl tert-butyl ether (35.3 g, 400 mmol) were dissolved in anhydrous acetonitrile (40 ml). At 0°C, trichloromethylsilane (29.8 g, 200 mmol) was added and the resulting solution was stirred overnight at ambient temperature. The solution was cooled down to 0°C and 1,8-Diazabicyclo[5.4.0]undec-7-ene (25.6 g, 168 mmol) was added. Finally, 1,2-bis(2-aminoethoxy)ethane (5.93 g, 40 mmol) was added and the mixture was stirred for 4 h at ambient temperature. GC-aliquots were taken to monitor the conversion. After filtration, the solvent and all volatiles were removed under reduced pressure. After addition of cyclohexane and filtration over charcoal and $MgSO_4$, the solvent was removed under reduced pressure to yield a liquid of **CA6** (N,N,N',N'-tetra[(dimethoxy)(methyl) silyl]-1,2-bis(2-aminoethoxy)ethane, 12.7 g, 56 %) with 89 % purity (GC).

**$^1$H** NMR (400 MHz, 20°C, $C_6D_6$): $\delta$ = 3.36 (t, $J$ = 7.0 Hz, 4H, 2x $CH_2$), 3.30 (s, 4H, 2x $CH_2$), 3.19 (s, 24 H, 8x OMe), 3.04 (t, $J$ = 7.0 Hz, 4 H, 2x $CH_2$), 0.05 (s, 12 H, Si-$CH_3$) ppm. **$^{13}$C NMR** (101 MHz, 20°C, $C_6D_6$): $\delta$ = 75.96 ($OCH_2$), 72.76 ($OCH_2$), 51.94 ($OCH_3$), 44.15 ($NCH_2$), -3.13 ($SiCH_3$) ppm. **GC-MS** (EI, 70 eV): m/z (%) = 564 ($M^+$, 1), 252 (13), 238 ([$CH_2N(Si(OMe)_2Me)_2$]$^+$, 100), 208 (30), 105 ([$Si(OMe)_2Me$]$^+$, 14), 75 (11).

**2) Reference Coupling Agents**

For comparison, the following compounds have been used as reference coupling agents:

Reference Coupling Agent **CA7:** Tin tetrachloride ($SnCl_4$)
Reference Coupling Agent **CA8:** Tetramethyl orthosilicate ($Si(OCH_3)_4$)

Reference Coupling Agent **CA9:**

N,N,N',N'-tetrakis[3-(trimethoxysilyl)propyl]propylenediamine which corresponds to the following formula:

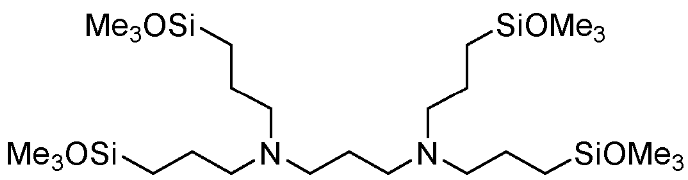

The application of this coupling agent is e.g. described in EP3260471A1.

**3) Synthesis of Polymers**

Subsequently preparation and testing of a) polymers and b) cured rubber formulations of different series are described.

**a) Preparation and testing of polymers**

## Polymerization Series 1

In Polymerization Series 1, Examples **E1**, **E2**, **E3** and **E4** and Comparative Examples **CE1** and **CE2** were prepared according to steps (a), (b) and (d) as described below. The complete data set of the polymerizations and the polymer characteristics are given in Table 1.

### Examples **E1, E2, E3** and **E4**

| | |
|---|---|
| Step (a.i): | Cyclohexane, conjugated diene monomer butadiene (97.7 % of the amount given in the table) and aromatic vinyl monomer styrene (100% of the amount given in the table) were charged to a 10 L reactor under exclusion of moisture and oxygen, in an inert nitrogen atmosphere. |
| Step (a.ii): | The stirred mixture was heated up to 40 °C. |
| Step (a.iii): | Then randomizer N,N,N',N'-tetramethyl ethylenediamine (randomizer 1) was added and n-butyllithium was charged dropwise to react the impurities until the color of the reaction mixture changed to yellowish (titration). |
| Step (a.iv): | After that the recipe amount of initiator n-butyllithium (nBuLi) in cyclohexane corresponding to the target molecular weight of the polymer was charged immediately and the reaction was stirred for further 60 min. The start time of the charge of the initiator was used as the start time of the polymerization. |
| Step (a.v): | Simultaneously the temperature was changed by heating up or cooling down the wall of the reactors beginning with the charge of the initiator to the final polymerization temperature of 60 °C with 1,3 K/min. |
| Step (b.i): | Butadiene (2.3 % of the amount given in the table) was added to the reactor. |
| Step (b.ii): | After 5 min the temperature was increased to 70 °C within 25 min. Then coupling agent **CA1** was added, and the reaction was stirred until the coupling ratio was constant (30- 120 min). |
| Step (d.i): | Afterwards, the reaction was terminated with charge of methanol. |
| Step (d.ii): | The polymer solution was stabilized with Irganox 1520D. |
| Step (d.iii): | The polymer was recovered by steam stripping and dried until a content of residual volatiles < 0.6% was obtained. |

### Comparative Examples **CE1** and **CE2**

Comparative Examples CE1 and CE2 were prepared as described for Examples E1-E4 except for the following differences in step (b.ii):

| | |
|---|---|
| Step (b.ii): | After 5 min coupling agents **CA7** and **CA8** respectively were added without increasing the temperature and the reaction was stirred for 20 min. |

**Table 1: Polymerization Series 1.**

| | **E1** | **E2** | **E3** | **E4** | **CE1** | **CE2** |
|---|---|---|---|---|---|---|
| Cyclohexane /g | 4759 | 4759 | 4759 | 4557 | 4759 | 4761 |
| Butadiene /g | 663 | 664 | 663 | 787 | 663 | 664 |
| Styrene /g | 176 | 176 | 176 | 209 | 176 | 176 |
| Randomizer **1** /mmol | 8.38 | 8.35 | 8.44 | 13.35 | 8.35 | 8.35 |
| Initiator **nBuLi** / mmol | 3.92 | 3.92 | 3.91 | 7.04 | 3.99 | 4.67 |
| Coupling agent | **CA1** | **CA1** | **CA1** | **CA1** | **CA7** | **CA8** |
| **CA** /mmol | 0.34 | 0.33 | 0.40 | 1.38 | 0.33 | 0.45 |
| Mp /kg/mol | 306 | 313 | 312 | 234 | 303 | 302 |
| Coupl. rate /% | 31.2 | 35.3 | 39.6 | 64.1 | 24.7 | 29.2 |

(continued)

| | E1 | E2 | E3 | E4 | CE1 | CE2 |
|---|---|---|---|---|---|---|
| Vinyl content /% | 62.6 | 63.1 | 62.5 | 64.4 | 62.7 | 62.4 |
| Styrene content /% | 21.2 | 20.9 | 21.0 | 21.1 | 21.0 | 20.9 |
| Tg/°C | -22.0 | -22.6 | -22.4 | -21.7 | -22.6 | -22.6 |
| $M_L$/MU (direct after coagulation) | 69.9 | 71.6 | 77.2 | 68.2 | 64.3 | 63.2 |
| Alkylation factor | <0 | <0 | <0 | 0.72 | <0 | <0 |

## Polymerization Series 2

In Polymerization Series 2, Examples **E5**, **E6**, **E7** and **E8** and Comparative Example CE3 were prepared as described below. The complete data set of the polymerizations and the polymer characteristics are given in Table 2.

### Examples **E5**, **E6**, **E7** and **E8**

Examples E5-E8 were prepared as described for Examples E1-E4 except for the following differences in step (b.i):

Step (b.i): Butadiene (0.5 % of the amount given in the table) was added to the reactor.

Moreover, the following additional step (c) is performed after step (b) and prior to step (d):

Step (c.i) Butadiene (1.8 % of the amount given in the table) was added to the reactor.
Step (c.ii) After 5 min chain end modifier 3-[Dimethyl(2-methyl-2-propyl)silyl]thiopropyl-(dimethoxy)(methyl)silane ("Si") was added.
Step (c.iii) The reaction was terminated after 20 min with charge of methanol.

### Comparative Example **CE3**

Comparative Example CE3 was prepared as described for Examples E5-E8 except for the following differences in step (b.ii):

Step (b.ii): After 1 min coupling agent **CA7** was added without increasing the temperature and the reaction was stirred for 20 min.

Moreover, step (c.iii) of Examples E5- E8 is not performed in step (c) of Comparative Example CE3.

**Table 2: Polymerization Series 2.**

| | E5 | E6 | E7 | E8 | CE3 |
|---|---|---|---|---|---|
| Cyclohexane /g | 4743 | 4744 | 4743 | 4541 | 4742 |
| Butadiene /g | 661 | 661 | 661 | 787 | 661 |
| Styrene /g | 176 | 176 | 176 | 209 | 176 |
| Randomizer **1** /mmol | 8.41 | 8.39 | 8.35 | 13.35 | 8.42 |
| Initiator **nBuLi** / mmol | 4.57 | 4.67 | 4.60 | 7.04 | 4.61 |
| Coupling agent | **CA1** | **CA1** | **CA1** | **CA1** | **CA7** |
| **CA** /mmol | 0.33 | 0.46 | 0.59 | 1.38 | 0.35 |
| End modifier Si /mmol | 3.38 | 2.85 | 2.34 | 2.71 | 3.31 |
| Mp /kg/mol | 312 | 297 | 308 | 236 | 315 |
| Coupl. rate /% | 30.4 | 39.3 | 47.3 | 64.2 | 27.8 |
| Vinyl content /% | 62.5 | 62.4 | 62.4 | 64.1 | 62.7 |

(continued)

| | E5 | E6 | E7 | E8 | CE3 |
|---|---|---|---|---|---|
| Styrene content /% | 21.4 | 20.9 | 21.1 | 21.4 | 21.3 |
| Tg /°C | -22.3 | -23.8 | -23.2 | -21.4 | -22.0 |
| $M_L$ /MU (direct after coagulation) | 71.1 | 71.2 | 81.1 | 67.8 | 69.4 |
| Alkylation factor | <0 | <0 | 0.05 | 0.72 | <0 |

**Polymerization Series 3**

In Polymerization Series 3, Examples **E9(a/b)**, **E10**, **E11(a/b)**, **E12(a/b)**, **E13** and **E14(a/b)** and Comparative Examples **CE4** and **CE5(a/b)** were prepared as described below. The complete data set of the polymerizations and the polymer characteristics are given in Table 3 for the Examples and Table 4 for the Comparative Examples.

Examples **E9a** and **E9b**

Examples E9a and E9b were prepared as described for Examples E1-E4 except for the following differences in steps (a.iii), (b.i), (b.ii) and (d.i) and by performing the following step (c) after step (b) and prior to step (d):

Step (a.iii): 2,2-(Bistetrahydrofuryl)propane (randomizer 2) was added as randomizer.
Step (b.i): Butadiene (0.5 % of the amount given in the table) was added to the reactor.
Step (b.ii): After 5 min the temperature was increased to 70°C within 25 min and simultaneously **CA1** was added. The reaction was stirred for further 60 min.
Step (c.i) Butadiene (1.8 % of the amount given in the table) was added to the reactor.
Step (c.ii) After 5 min chain end modifier Si was added.
Step (d.i): The reaction was terminated after 20 min with charge of methanol.

Examples **E10, E11(a/b), E12(a/b), E13** and **E14(a/b)**

Examples E10-E14b were prepared as described for Examples E1-E4 except for the following differences in steps (a.i), (a.iii), (b.i), (b.ii) and (d.i) and by performing the following step (c) after step (b) and prior to step (d):

Step (a.i): Cyclohexane, butadiene and styrene were charged to a 20 L reactor.
Step (a.iii): 2,2-(Bistetrahydrofuryl)propane (randomizer 2) was added as randomizer.
Step (b.i): Butadiene (0.5 % of the amount given in the table) was added to the reactor.
Step (b.ii): After 5 min the temperature was increased to 70°C within 25 min and simultaneously coupling agents **CA2**, **CA3**, **CA4**, **CA5** and **CA6** respectively were added. The reaction was stirred for further 60 min.
Step (c.i) Butadiene (1.8 % of the amount given in the table) was added to the reactor.
Step (c.ii) After 5 min chain end modifier Si was added.
Step (d.i): The reaction was terminated after 20 min with charge of methanol.

Comparative Example **CE4**

Comparative Example CE4 was prepared as described for Examples E9a and E9b except for the following differences in step (b.ii):

Step (b.ii): After 1 min coupling agent **CA7** was added without increasing the temperature and the reaction was stirred for 20 min.

Comparative Examples **CE5a** and **CE5b**

Comparative Examples CE5a and CE5b were prepared as described for Examples E10a-E14b except for the following differences in steps (b.ii) and (c.i):

Step (b.ii): After 1 min coupling agent **CA9** was added without increasing the temperature and the reaction was stirred for further 60 min.

**Table 3: Examples of Polymerization Series 3.**

| | **E9a** | **E9b** | **E10** | **E11a** | **E11b** | **E12a** | **E12b** | **E13** | **E14a** | **E14b** : |
|---|---|---|---|---|---|---|---|---|---|---|
| Cyclohexane /g | 4722 | 4736 | 6336 | 6328 | 6345 | 6340 | 6337 | 6343 | 6345 | 6335 : |
| Butadiene /g | 652 | 656 | 882 | 881 | 882 | 883 | 884 | 882 | 883 | 882 |
| Styrene /g | 182 | 175 | 236 | 236 | 235 | 236 | 236 | 236 | 235 | 235 |
| Randomizer **2** /mmol | 6.20 | 6.20 | 8.43 | 5.55 | 4.99 | 5.00 | 5.00 | 4.96 | 4.96 | 5.08 |
| Initiator **nBuLi** / mmol | 4.51 | 4.22 | 5.44 | 6.85 | 6.16 | 6.18 | 6.32 | 6.02 | 6.19 | 6.22 |
| Coupling agent | **CA1** | | **CA2** | **CA3** | | **CA4** | | **CA5** | **CA6** | |
| **CA** /mmol | 0.37 | 0.36 | 0.77 | 0.59 | 0.56 | 0.74 | 0.71 | 0.31 | 0.41 | 0.37 |
| End modifier **Si** /mmol | 3.46 | 3.46 | 4.66 | 4.68 | 4.66 | 4.61 | 4.65 | 4.65 | 4.65 | 4.73 |
| Blend (ratio) | E9 (1:1) | | - | **E11** (1:1) | | **E12** (1:1) | | - | **E14** (1:1) | |
| Mp /kg/mol | 305 | | 318 | 316 | | 310 | | 314 | 308 | |
| Coupl. rate /% | 41.7 | | 42.2 | 41.5 | | 41.7 | | 42.6 | 45.8 | |
| Vinyl content /% | 62.1 | | 61.6 | 62.9 | | 63.6 | | 61.4 | 63.3 | |
| Styrene content /% | 21.6 | | 20.9 | 20.8 | | 20.7 | | 20.6 | 21.1 | |
| Tg/°C | -24.8 | | -26.8 | -24.7 | | -24.4 | | -26.7 | -24.4 | |
| $M_L$ /MU (direct after coagulation) | 78.1 | | 78.9 | 75.2 | | 78.1 | | 79.6 | 78.7 | |
| Alkylation factor | <0 | | <0 | <0 | | <0 | | <0 | <0 | |

| **Table 4: Comparative Examples of Polymerization Series 3.** | | | |
|---|---|---|---|
| | **CE4** | **CE5a** | **CE5b** |
| Cyclohexane /g | 4743 | 6346 | 6336 |
| Butadiene /g | 667 | 884 | 884 |
| Styrene /g | 179 | 236 | 235 |
| Randomizer **1** /mmol | 5.05 | 5.15 | 5.07 |
| Initiator **nBuLi** / mmol | 4.26 | 6.29 | 6.24 |
| Coupling agent | **CA7** | **CA9** | |
| **CA** /mmol | 0.29 | 0.24 | 0.29 |
| End modifier **Si** /mmol | 3.46 | 4.71 | 4.69 |
| Blend (ratio) | - | **CE5** (1:1) | |
| Mp /kg/mol | 311 | 319 | |
| Coupl. rate /% | 24.3 | 39.7 | |
| Vinyl content /% | 61.8 | 62.2 | |
| Styrene content /% | 21.8 | 20.7 | |
| Tg /°C | -24.7 | -25.4 | |
| $M_L$ /MU (direct after coagulation) | 66.1 | 79.5 | |
| Alkylation factor | <0 | <0 | |

**Polymerization Series 4**

In Polymerization Series 4, Examples **E15**, **E16** and **E17** and Comparative Example **CE6** were prepared as described below. The complete data set of the polymerizations and the polymer characteristics are given in Table 5.

Examples **E15**, **E16** and **E17**

Examples E15, E16 and E17 were prepared as described for Examples E1-E4 except for the following differences in steps (a.i)-(a.v), (b.i)-(b.ii) and (d.i) and by performing the following step (c) after step (b) and prior to step (d):

| | |
|---|---|
| Step (a.i): | 35.3 % of the butadiene amount given in the table and 66.6 % of the styrene amount given in the table were charged with cyclohexane to a 10 L reactor. |
| Step (a.ii): | The stirred mixture was heated up to 56.5 °C. |
| Step (a.iii): | 2,2-(Bistetrahydrofuryl)propane (Randomizer 2) was added as randomizer. |
| Step (a.iv): | After the initiator was charged, the reaction was stirred for further 15 min. |
| Step (a.v): | Simultaneously the temperature was increased by heating up or cooling down in the wall of the reactors beginning with the charge of the initiator to the final polymerization temperature of 78 °C with 2 K/min. After 15 min butadiene (62.8 % of the amount given in the table) and styrene (33.4 % of the amount given in the table) were charged over 60 min and the mixture was stirred further for 20 min. |
| Step (b.i): | Butadiene (0.5 % of the amount given in the table) was added to the reactor. |
| Step (b.ii): | After 3 min coupling agents **CA1**, **CA3** and **CA4** respectively were added without increasing the temperature and the reaction was stirred for 60 min. |
| Step (c.i) | Butadiene (1.4 % of the amount given in the table) was added to the reactor. |
| Step (c.ii) | After 3 min chain end modifier Si was added. |
| Step (d.i): | The reaction was terminated after 18 min with charge of methanol. |

Comparative Example **CE6**

Comparative Example CE6 was prepared as described for Examples E15, E16 and E17 except for the following differences in step (b.ii):

Step (b.ii): After 3 min coupling agent **CA8** was added without increasing the temperature and the reaction was stirred for 20 min.

**Table 5: Polymerization Series 4.**

| | **E15** | **E16** | **E17** | **CE3** |
|---|---|---|---|---|
| Cyclohexane /g | 4185 | 4185 | 4184 | 4183 |
| Butadiene /g | 783 | 783 | 785 | 785 |
| Styrene /g | 136 | 136 | 133 | 133 |
| Randomizer **1** /mmol | 1.60 | 1.60 | 1.60 | 1.60 |
| Initiator **nBuLi** / mmol | 5.44 | 5.48 | 5.47 | 5.15 |
| Coupling agent | **CA1** | **CA3** | **CA4** | **CA8** |
| **CA** /mmol | 0.32 | 0.38 | 0.46 | 0.41 |
| Chain end modifier **Si** | 3.68 | 3.68 | 3.68 | 3.70 |
| Mp /kg/mol | 316 | 341 | 323 | 327 |
| Coupl. rate /% | 43.2 | 38.7 | 49.3 | 29.7 |
| Vinyl content /% | 29.1 | 29.7 | 29.2 | 30.1 |
| Styrene content /% | 14.7 | 14.7 | 14.4 | 14.8 |
| Tg /°C | -63.2 | -63.2 | -63.5 | -62.4 |
| $M_L$ /MU (direct after coagulation) | 80.1 | 83.9 | 75.3 | 68.7 |
| Alkylation factor | <0 | <0 | <0 | <0 |

**b) Preparation and testing of cured rubber formulations**

After workup of the polymers, the samples were compounded in a two-step mixing process according to the

mixing regime listed in Table 6 below with the amounts of the formulation ingredients given in phr ("parts per hundred rubber"):

**Table 6: Formulation recipes**

| **Mixing stage** | **Formulation** | **Amounts / phr** | |
|---|---|---|---|
| 1st mixing step | polymer | 80.0 | |
| | BUNA™ cis 132[1] | 20.0 | |
| | Ultrasil® 7000 GR[2] | 80.0 | |
| | Si 75®[3] | 6.9 | |
| | Stearic Acid | 1.0 | |
| | | Dusantox® 6PPD[4] | 2.0 |
| | | Zinc oxide (ZnO) | 2.5 |
| | | Wax Antilux® 654[5] | 1.5 |
| | | TDAE VivaTec500[6] | 20.0 |
| 2nd mixing step | | sulfur | 1.4 |
| | | TBBS[8] | 1.5 |
| | | DPG[9] | 1.5 |

[1]: Synthos Schkopau GmbH
[2]: Evonik Industries; BET surface area about 160 $m^2/g$
[3]: Evonik Industries; bis(triethoxysilylpropyl)disulfide
[4]: N-1,3-dimethylbutyl-N'-phenyl-p-phenylenediamine; Duslo
[5]: Antisun and antiozonant wax; Rheinchemie (Lanxess)
[6]: Treated distilled aromatic extract; extender oil by Hansen & Rosenthal
[7]: N-tert-butyl-2-benzothiazole sulfenamide
[8]: 1,3-diphenylguanidine

The properties of the cured (vulcanized) rubber formulations were determined. In the following tables, the performance data of the rubber formulations ("vulcanizates") is listed. It is to be noted that vulcanized rubbers of one series can be compared only. Therefore, only entries within one series can be compared to each other.

**Table 7: Performance data (Series 1)**

| **Polymer** | **CE1** | **CE2** | E1 | **E2** | **E3** | **E4** |
|---|---|---|---|---|---|---|
| ML 1+4* /MU | 62.4 | 64.2 | 70.8 | 73.4 | 79.4 | 69.1 |
| CML 1+4/MU | 71.7 | 79.8 | 78.8 | 82.3 | 83.4 | 66.8 |
| **CML - ML* /MU** | **9.3** | 15.6 | **8.0** | **8.9** | 4.0 | **-2.3** |
| Tensile strength /MPa | 18.0 | 19.1 | 18.4 | 17.9 | 19.2 | 18.4 |
| Elongation @ break /% | 437 | 432 | 419 | 401 | 414 | 412 |
| Mod100 /MPa | 2.5 | 2.5 | 2.4 | 2.4 | 2.4 | 2.4 |
| Mod 300 /MPa | 10.6 | 11.4 | 11.3 | 11.4 | 11.8 | 11.5 |
| DIN Abrasion /$mm^3$ | 140 | 134 | 138 | 138 | 138 | 131 |
| Hardness Shore A @ 0°C | 67.1 | 66.9 | 66.9 | 65.7 | 66.5 | 64.7 |
| Hardness Shore A @ RT | 63.5 | 64.7 | 63.9 | 63.5 | 64.1 | 61.9 |
| Hardness Shore A @ 60°C | 61.9 | 62.1 | 62.0 | 61.7 | 62.5 | 59.9 |
| Rebound resilience @ 0°C | 14.36 | 13.98 | 13.93 | 13.61 | 13.50 | 12.67 |
| Rebound resilience @ 60°C | 55.91 | 58.28 | 59.14 | 59.23 | 58.75 | 59.90 |
| HBU sample /°C | 128.9 | 129.4 | 124.3 | 123.3 | 122.4 | 128.2 |
| tan d @ 0°C | 0.4364 | 0.4420 | 0.4134 | 0.4177 | 0.4080 | 0.4200 |
| **tan d @ 60°C** | **0.1637** | **0.1616** | **0.1359** | **0.1384** | **0.1267** | **0.1321** |
| tan dmax | 0.8426 | 0.8420 | 0.8886 | 0.8802 | 0.9077 | 0.8874 |
| T @ tan dmax /°C | -22 | -20 | -20 | -20 | -20 | -18 |

* directly before compounding

Lower viscosity increase (CML - ML), i.e. difference from polymer (ML) to the corresponding compound (CML), and improved rolling resistance (RR) indicator (tan d @ 60 °C) are obtained (both features are marked bold) when using the inventive coupling agents in Examples E1-E4 compared to Comparative Examples CE1 and CE2.

**Table 8: Performance data (Series 2)**

| | **CE3** | **E5** | **E6** | **E7** |
|---|---|---|---|---|
| ML 1+4* /MU | 65.8 | 70.4 | 74.2 | 80.7 |
| CML 1+4/MU | 85.2 | 85.3 | 81.5 | 82.3 |
| **CML - ML* /MU** | **19.4** | **14.9** | **7.3** | **1.6** |
| Tensile strength /MPa | 19.9 | 19.9 | 21.0 | 20.2 |
| Elongation @ break /% | 428 | 420 | 428 | 423 |
| Mod100 /MPa | 2.2 | 2.2 | 2.3 | 2.3 |
| Mod 300 /MPa | 11.3 | 11.7 | 12.0 | 11.7 |
| DIN Abrasion /$mm^3$ | 135 | 128 | 129 | 132 |
| Hardness Shore A @ 0°C | 64.9 | 63.9 | 64.9 | 64.5 |
| Hardness Shore A @ RT | 61.7 | 60.5 | 62.1 | 61.7 |
| Hardness Shore A @ 60°C | 62.5 | 60.3 | 61.9 | 62.5 |
| Rebound resilience @ 0°C | 16.3 | 16.7 | 17.3 | 17.1 |
| Rebound resilience @ 60°C | 61.2 | 63.5 | 63.6 | 62.2 |
| HBU sample /°C | 117.0 | 113.9 | 114.1 | 115.8 |
| tan d @ 0°C | 0.390 | 0.383 | 0.376 | 0.402 |
| **tan** d **@ 60°C** | **0.115** | **0.106** | **0.107** | **0.118** |
| tan dmax | 0.951 | 0.964 | 0.947 | 0.910 |
| T @ tan dmax /°C | -21 | -21 | -21 | -20 |

* directly before compounding

Lower viscosity increase (CML - ML) and improved to maintained RR indicator (tan d @ 60 °C) are obtained (both features are marked bold) when using the inventive coupling agents in Examples E5-E8 compared to Comparative Example CE3.

**Table 9: Performance data (Series 3)**

| | **CE4** | **CE5** | **E9** | **E13** | **E14** | **E11** | **E10** | **E12** |
|---|---|---|---|---|---|---|---|---|
| ML 1+4* /MU | 65,7 | 76,6 | 73,1 | 75,4 | 74,6 | 74,6 | 76,8 | 75,5 |
| CML 1+4/MU | 85,8 | 96,7 | 85,8 | 89,8 | 86,9 | 89,1 | 90,5 | 94,7 |
| **CML - ML /MU** | **20,1** | **20,1** | **12,7** | **14,4** | **12,3** | **14,5** | **13,7** | 19,2 |
| Shore A @ 0°C | 65 | 66 | 65 | 67 | 66 | 66 | 65 | 64 |
| Shore A @ RT | 62 | 65 | 63 | 63 | 64 | 64 | 63 | 62 |
| Shore A @ 60°C | 61 | 62 | 59 | 62 | 61 | 61 | 60 | 59 |
| M100 /MPa | 2.1 | 2.3 | 2.0 | 2.1 | 2.1 | 2.2 | 2.0 | 2.0 |
| M300/MPa | 10.4 | 10.7 | 9.9 | 9.7 | 10.6 | 11.5 | 10.1 | 10.5 |
| DIN Abras. /$mm^3$ | 126 | 123 | 127 | 132 | 130 | 120 | 123 | 121 |
| Reb. res. @0°C /% | 14.5 | 16.6 | 15.6 | 15.6 | 13.9 | 14.6 | 16.1 | 15.5 |
| Reb. res.@60°C/% | 60.4 | 58.9 | 57.5 | 58.3 | 59.6 | 60.3 | 58.5 | 60.6 |
| tan d @ 0°C | 0.415 | 0.431 | 0.450 | 0.415 | 0.436 | 0.408 | 0.417 | 0.428 |
| **tan d @ 60°C** | **0.131** | **0.145** | **0.154** | **0.147** | **0.141** | **0.123** | **0.138** | 0.130 |
| tan dmax | 0.965 | 0.900 | 0.903 | 0.914 | 0.935 | 0.940 | 0.924 | 0.950 |

* directly before compounding

Lower viscosity increase (CML - ML) and maintained RR indicator (tan d @ 60 °C) are obtained (both features are marked bold) when using the inventive coupling agents in Examples E9-E14 compared to Comparative Examples CE4

and CE5.

**Table 10: Performance data (Series 4)**

| | CE6 | E15 | E16 | E17 |
|---|---|---|---|---|
| ML 1+4* /MU | 70,3 | 77,9 | 82,5 | 76,5 |
| CML 1+4/MU | 112,3 | 106,2 | 110,3 | 103,3 |
| **CML- ML* /MU** | **42,0** | **28,3** | **27,8** | **26,8** |
| Shore A @ 0°C | 68 | 69 | 67 | 67 |
| Shore A @ RT | 67 | 66 | 68 | 68 |
| Shore A @ 60°C | 62 | 61 | 63 | 63 |
| M100 /MPa | 2.0 | 2.0 | 2.0 | 2.0 |
| M300/MPa | 8.4 | 8.2 | 8.8 | 8.3 |
| DIN Abras. /$mm^3$ | 87 | 89 | 89 | 88 |
| Reb. res. @0°C /% | 38.9 | 40.1 | 39.8 | 40.6 |
| Reb. res.@60°C/% | 59.5 | 59.5 | 60.6 | 59.7 |
| tan d @ 0°C | 0.259 | 0.254 | 0.252 | 0.248 |
| **tan d @ 60°C** | **0.148** | **0.144** | **0.140** | **0.142** |
| tan dmax | 0.779 | 0.785 | 0.793 | 0.794 |

* directly before compounding

Reduced increase in viscosity (CML - ML) as well as improved or maintained RR indicator (tan d @ 60 °C) are obtained (both features are marked bold) when using the invention coupling agents in Examples E15-E17 compared to Comparative Example CE6.

By using the coupling agent according to the present invention, the coupled fraction is hydrolyzed during compounding leading to lower molecular weights with functional groups at the chain ends capable of interacting with the filler. As a result, lower viscosities of the silica formulations are obtained while maintaining dynamic properties of the cured silica formulations when compared to reference coupling agents. Due to the reduced compound viscosities, the processing properties are improved although the functionalization degree is increased.

**4) Test methods**

Various methods were used to test and measure the examples. A description of each technique is provided below.

<u>**NMR-spectroscopy**</u>

NMR-spectroscopy was performed on a BRUKER Avance II (400MHz) in a 5-mm dual probe. Vinyl and total styrene content were measured using $^1$H-NMR according to ISO 21561-2005. $CDCl_3$/TMS was used as solvent in a weight ratio of 0.05%: 99.95%. Cis-1.4 and trans 1.4 bonds were analyzed using $^{13}$C-NMR according to ASTM D3677.

<u>**Size Exclusion Chromatography**</u>

Molecular weight and molecular weight distribution of the polymer were each measured using size exclusion chromatography (SEC) based on polystyrene standards. Each polymer sample (9 to 9.5 mg) was dissolved in tetrahydrofuran (10 mL) to form a solution. The solution was filtered using a 0.45-μm filter. A 100-μL sample was fed into a GPC column (Agilent Technologies 1260 Infinity with 3 PLgel 10μm MIXED-B columns). Refraction Index-detection was used as the detector for analyzing the molecular weight. The molecular weight was calculated as polystyrene based on the calibration with EasiCal PS1 (Easy A and B) Polystyrene standards from Agilent Technologies. All molecular weight values. e.g. the peak molecular weight (Mp), number-average molecular weight (Mn) figures or the weight-average molecular weight (Mw) figures. are given based on the polystyrene standards. The molecular weight distribution is expressed as the dispersity D = Mw/Mn.

## Measurement of Glass Transition Temperature Tg

The glass transition temperature $T_g$ was determined as described in ISO 11357-2 (1999) by using the DSC Q2000 under the following conditions:

| | |
|---|---|
| Weight | : ca. 10 - 12 mg |
| Sample container | : Alu/S |
| Temperature range | : (-150...100) °C |
| Heating rate | : 20 K/min or 5 K/min |
| Cooling rate | : free cooling |
| Purge gas | : 20 ml He/min |
| Cooling agent | : liquid nitrogen |

Each sample was measured at least once. The measurements contain two heating runs. The 2$^{nd}$ heating run was used to determine the glass transition temperatures.

## Mooney viscosity

Mooney viscosity of the samples was measured according to ASTM_D 1646.

## Alkylation Factor

The alkylation factor indicates the ratio of the number of alkoxy- or hydroxylgroups and the number of silicon atoms in the coupling agent on average after coupling reaction of the living polymer chain end with the coupling agent. If the alkylation factor A is <1.0, there are on average more silicon atoms than hydroxyl or alkoxy groups in the coupling residue after the coupling reaction. If the alkylation factor is < 0, there are more equivalents initiator added than existing leaving groups (e.g. methoxy groups) on the coupling agent. The alkylation factor A relating to the process of producing the polymer may be calculated according to equation (1):

$$(1)\quad A = [w-(x/y)]/z$$

with

A-Alkylation Factor
w - number of OR groups (with R = hydrocarbon group) in coupling agent
x - amount of initiator in mmol
y - amount of coupling agent in mmol
z - number of silicon atoms in coupling agent

Alternatively, the alkylation factor A of the polymer may be calculated according to equation (2), taking into account that A is <1.0, when more polymer chains P are attached to the coupling agent than OR groups in total:

$$(2)\quad A = [w-v]/z$$

with v - number of conjugated diene polymer P attached to coupling agent

However, with regard to equation (2), it must be taken into account that not every living chain end is sufficiently reactive due to steric hindrance, so that there may be more OR than P groups.

## FTIR-spectroscopy

FTIR-spectroscopy measured in attenuated total reflection was used to determine the vinyl content and styrene content.

## Measurements of non-vulcanized rheological properties

Measurements of non-vulcanized rheological properties according to ASTM D 5289-95 were made using a

rotorless shear rheometer (MDR 2000 E) to characterize cure characteristics. Test pieces were vulcanized to $t_{95}$ at 160°C. For rebound resilience (RB) tests the specimen were vulcanized to $t_{95+5}$ at 160°C. Tensile strength (TS) and moduli (modulus at 100% and 300% elongation [Modulus 100 and Modulus 300]) were measured according to ASTM D 412 on a Zwick Z010. DIN abrasion was measured according to DIN 53516 (1987-06-01). Shore A @ 0°C, Shore A @ RT and Shore A @ 60°C were measured according to ASTM D2240 at 0°C, at room temperature (23°C) and at 60°C. Rebound resilience (ISO 4662) was measured at 0°C, RT (20°C) and 60°. Dynamic properties in terms of tan $\delta$ and E' at specified temperatures were measured using a dynamic spectrometer Eplexor 150N/500N manufactured by Gabo Qualimeter Testanlagen GmbH (Germany) applying a compression dynamic strain of 1 % at a frequency of 2 Hz in strain measuring mode.

## Claims

1. An aminosilane compound of the following Formula (I):

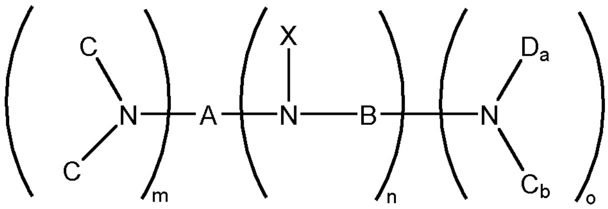

wherein, in Formula (I),

m is 1 to 3;
n is 0 to 3;
o is 1 to 3;
A is a $C_2$-$C_{20}$ hydrocarbon group which optionally comprises at least one heteroatom, selected from S, O and Si;
B is a $C_2$-$C_{20}$ hydrocarbon group which optionally comprises at least one heteroatom, selected from S, O and Si;
C independently is $Si(R^1)_x(OR^2)_y$, wherein $R^1$ and $R^2$ are each independently a $C_1$-$C_{20}$ hydrocarbon group, x is 1, 2 or 3, y is 0, 1 or 2 with y = 3-x; when x is 3 then at least one $R^1$ is a vinyl group;
D is a $C_1$-$C_{20}$ hydrocarbon group;
X is D or C;
a is 0, 1 or 2; b is 0, 1 or 2; and a + b = 2; and

when n is 0 and a is 1 or 2, then A and D may be connected so as to form a cyclic structure.

2. The compound of claim 1,
wherein, in Formula (I),

m is 1 to 2;
n is 0 to 2;
o is 1 to 2;
m + n + o = 2, 3 or 4;
A and B each independently are a $C_2$-$C_6$ aliphatic hydrocarbon group which optionally comprises at least one heteroatom, selected from S, O and Si;
C independently is $Si(R^1)_x(OR^2)_y$, wherein $R^1$ and $R^2$ are each independently a $C_1$-$C_{10}$ aliphatic hydrocarbon group; x is 1, 2 or 3, y is 0, 1 or 2, and y = 3-x; when x is 3 then at least one $R^1$ is a vinyl group; and
D is a $C_1$-$C_{10}$ hydrocarbon group.

3. The compound of claim 1 or 2,
wherein, in Formula (I),

A and B each independently are a $C_2$-$C_6$ aliphatic hydrocarbon group which comprises at least one heteroatom, selected from S and O;
C independently is $Si(R^1)_x(OR^2)_y$, wherein $R^1$ and $R^2$ are each independently a $C_1$-$C_{10}$ aliphatic hydrocarbon group; x is 1, and y is 2;
D is a $C_1$-$C_6$ hydrocarbon group;

a is 0 or 1;
b is 1 or 2; and a + b = 2; and
when a is 1, then A and D may be connected so as to form a cyclic structure.

**4.** The compound of any of claims 1-3,
wherein, in Formula (I),

A is a $C_2$-$C_6$ hydrocarbon group which comprises one or two heteroatoms, selected from S and O;
D is a $C_1$-$C_6$ hydrocarbon group
a is 0 or 1;
b is 1 or 2; and a + b = 2
n is 0; and

when a is 1, then A and D may be connected so as to form a cyclic structure.

**5.** The compound of any of claims 1-4,
wherein, in Formula (I),

m is 1; and/or
n is 0; and/or
o is 1; and/or
A is a $C_2$-$C_6$ hydrocarbon group, preferably a $C_2$ hydrocarbon group, or is a $C_2$-$C_6$ hydrocarbon group which contains two S or two O atoms; and/or
C independently is $Si(R^1)_x(OR^2)_y$, wherein $R^1$ and $R^2$ are each independently a $C_1$-$C_6$ hydrocarbon group, preferably a $C_1$-$C_3$ hydrocarbon group, more preferably a $C_1$ hydrocarbon group, x is land y is 2, preferably 2.

**6.** The compound of claim 1, which corresponds to the one of the following structures:

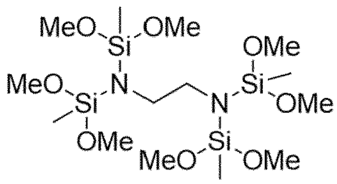
,
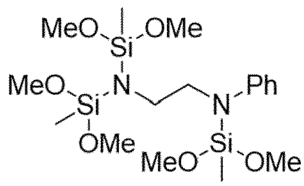
,
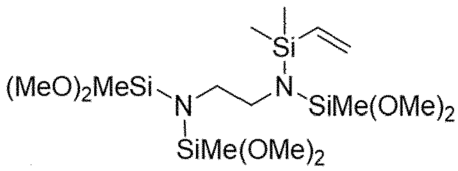
,
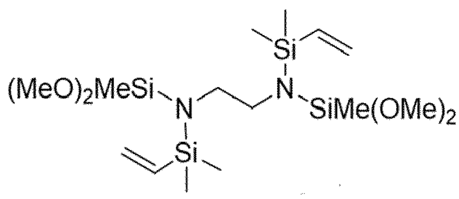
,
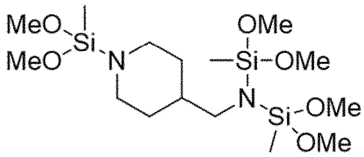
,
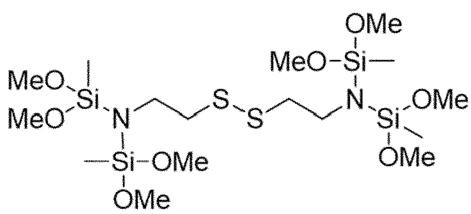
,

or

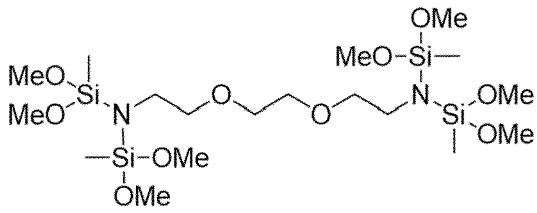

.

7. A process for preparing a polymer, wherein the process comprises the following steps:

(a) reacting conjugated diene monomers and optionally one or more aromatic vinyl monomers in the presence of one or more initiator compounds in a polymerization process to form a living polymer chain,
(b) reacting the living polymer chain with an aminosilane compound of formula (I) as defined in any of claims 1-6,
(c) optionally reacting the remaining living chain ends with a chain end modifier.

8. The process of claim 7, wherein the polymerization process is an anionic or radical or transition metal-catalyzed polymerization.

9. A polymer, obtainable by the process of claim 7 or 8.

10. A polymer which comprises the following structure:

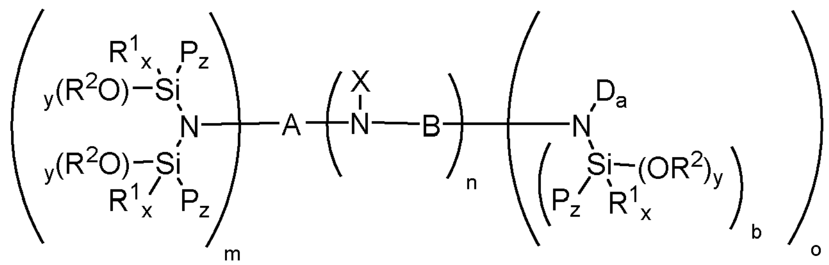

wherein A, B, $R^1$, $R^2$, D, a, b, m, n and o are defined as in any of claims 1-5;

X is $SiR^1_x(OR^2)_yP_z$ or a $C_1$-$C_{10}$ hydrocarbon;
P is a conjugated diene polymer optionally comprising vinylaromatic monomers; and
x is 0, 1, 2 or 3;
y is 0, 1 or 2;
z is 1 or 2; and

$$x + y + z = 3.$$

11. A non-vulcanized polymer composition comprising the polymer as defined in claim 9 or 10 and one or more additives.

12. The polymer composition according to claim 11, wherein the one or more additives are selected from extender oils, stabilizers and further polymers.

13. The polymer composition according to claim 11 or 12, further comprising one or more fillers.

14. The polymer composition according to claim 13, wherein the one or more fillers are selected from carbon black, carbon nanotubes, graphite, graphene, silica, carbon-silica dual-phase filler, clays calcium carbonate, magnesium carbonate, lignin, glass particle-based fillers and starch-based fillers, preferably the filler is silica.

15. The polymer composition according to any one of claims 11 to 14, further comprising one or more vulcanizing agents.

16. A vulcanized polymer composition obtainable by vulcanizing the polymer composition as defined in claim 15.

**17.** A method of making a vulcanized polymer composition, wherein the method comprises the step of vulcanizing the polymer composition as defined in claim 15.

**18.** An article comprising at least one component formed from the vulcanized polymer composition as defined in claim 16.

**19.** The article according to claim 18, which is a rubber-comprising article, and preferably is a tire, a tire tread, a tire side wall, a tire carcass, a belt, a gasket, a seal, a hose, a vibration damper, a footwear component, a golf ball or a hose, more preferably a summer, winter, all-weather passenger car tire or truck tire.

Europäisches Patentamt
European Patent Office
Office européen des brevets

# EUROPEAN SEARCH REPORT

Application Number
EP 24 21 2374

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 059 240 A1 (TRINSEO EUROPE GMBH [CH]) 24 August 2016 (2016-08-24)<br>* compounds M4 page 21, M9 pages 23-24, M12 and M13 page 25, polymerization procedures pages 26-27 *<br>----- | 1-19 | INV.<br>C07F7/18<br>B60C1/00<br>C08C19/25<br>C08C19/44<br>C08F4/48<br>C08F236/10<br>C08K3/36<br>C08L15/00 |

TECHNICAL FIELDS SEARCHED (IPC)

C07F
B60C
C09J
C08F
C08K
C08C
C08L

The present search report has been drawn up for all claims

| Place of search | Date of completion of the search | Examiner |
|---|---|---|
| The Hague | 28 April 2025 | Bourghida, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 24 21 2374

This annex lists the patent family members relating to the patent documents cited in the above-mentioned European search report. The members are as contained in the European Patent Office EDP file on
The European Patent Office is in no way liable for these particulars which are merely given for the purpose of information.

28-04-2025

| Patent document cited in search report | Publication date | Patent family member(s) | Publication date |
|---|---|---|---|
| EP 3059240 A1 | 24-08-2016 | BR 112017017770 A2 | 03-04-2018 |
| | | CN 107406467 A | 28-11-2017 |
| | | EP 3059240 A1 | 24-08-2016 |
| | | HU E051407 T2 | 01-03-2021 |
| | | JP 6936364 B2 | 15-09-2021 |
| | | JP 2018512385 A | 17-05-2018 |
| | | JP 2020169189 A | 15-10-2020 |
| | | KR 20170118794 A | 25-10-2017 |
| | | PL 3059240 T3 | 31-03-2020 |
| | | RU 2017132272 A | 18-03-2019 |
| | | SG 10202001415S A | 29-04-2020 |
| | | SG 11201706738Q A | 28-09-2017 |
| | | TW 201713672 A | 16-04-2017 |
| | | US 2018030070 A1 | 01-02-2018 |
| | | WO 2016131590 A1 | 25-08-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20100317852 A1
- WO 2009148932 A
- WO 2015055252 A
- WO 2016131590 A
- WO 2017216344 A
- WO 2019020752 A
- WO 2008108377 A
- WO 2019216645 A1
- WO 2014040640 A
- WO 2015010710 A
- WO 2007047943 A
- US 6229036 B
- US 20130131263 A
- WO 2014040639 A
- WO 2020179705 A1
- JP 2020015881 A
- WO 2019225824 A1
- JP 428704 A
- JP 436636 A
- JP 63004841 A
- JP 1037970 A
- JP 1053851 A
- JP 2009041 A
- JP 8109219 A
- US 20050159513 A
- WO 2010049261 A
- EP 3260471 A1


### Non-patent literature cited in the description


- **R. WAKABAYASHI et al.** *J. Organomet. Chem.*, 2012, vol. 716, 26-31
- **M. YOSHIKAWA et al.** *Angew. Chem. Int. Ed.*, 2017, vol. 56, 13990-13994
- **KAUTSCHUK** ; **GUMMI**. *Kunststoffe*, vol. 52, 799-805
- **F. RÖTHEMEYER** ; **F. SOMMER**. Kautschuk Technologie. Hanser Verlag, 2006, 340-344
- Rubber Handbook, SGF. The Swedish Institution of Rubber Technology, 2000